# EUROPEAN PATENT APPLICATION

(11) **EP 0 933 149 A2**
(43) Date of publication of application: **04.08.1999**
(21) Application number: 98118411.2
(22) Date of filing: 29.09.1998
(51) Int. Cl.: B21D 45/00, B26D 7/18

(54) **Method and apparatus for separating punched out parts and part distortion eliminating method**

(30) Priority: 07.10.1997 JP 27451997; 28.07.1998 JP 21322598
(71) Applicant: NIIGATA ENGINEERING CO., LTD., Ohta-ku, Tokyo 144-0053 (JP)
(72) Inventor: Tokunaga Akihisa, Isogo-ku Yokohama-city, Kanagawa-ref. (JP); Nakajima Keizo, Isogo-ku Yokohama-city, Kanagawa-ref. (JP); Shimizu Hiroyuki, Isogo-ku Yokohama-city, Kanagawa-ref. (JP)
(74) Representative: Kern, Wolfgang, Dipl.-Ing.

(57) **Abstract**

The invention provides a method for separating parts from a base metal plate by fabricating the outlines of the parts with uncut portions remained on the base metal plate, which comprises disposing a pushing member on both sides of the base metal plate along the longitudinal direction of the base metal plate; pushing the base metal plate by the pushing members to hold the base metal plate in a corrugated shape in the longitudinal direction of the base metal plate; and moving the base metal plate or the pushing members back and forth in the longitudinal direction of the base metal plate to apply a repeated stress to the uncut portions of the base metal plate to cause metal fatigue, thereby cutting off the uncut portions, and an apparatus thereof.

## Description

### BACKGROUND OF THE INVENTION

### Field of the Invention

The invention relates to a part separating method and apparatus for blank layout of a plurality of parts from a base metal plate and a method for eliminating distortion. The invention also relates to a part separating apparatus for separating outline-fabricated parts from a base metal plate while leaving uncut portions to the base metal plate, and more specifically to a structure that distortion of the base metal plate and parts can be eliminated after separating the parts from the base metal plate.

### Description of the Related Art

Generally, where blank layout of a plurality of parts is made from a large base metal plate by a punching machine or the like, parts are punched out from the base metal plate with uncut portions remained to fabricate outlines of the punched parts, then the uncut portions are separated from the base metal plate, thereby improving a fabrication efficiency. The parts are generally separated by removing the base metal plate from the machine and separating the uncut portions one by one. Since this step is a hard labor, its automation is demanded.

To make it automated, secure separation is hard to realize and it happens that, a defective portion is formed when parts are separated, or the base metal plate or parts have distortion after the separation of the parts.

Under the circumstances, there is known a part separating apparatus as described in Japanese Patent Laid-Open Publications Nos. Hei 4-360727 and Sho 63-183731.

Such a part separating apparatus has two lower rotatable rollers made of an elastic material, and an upper roller made of an elastic material which is disposed between the lower rollers, rotatably pushed downward and also vertically movable with respect to the lower rollers.

However, the conventional part separating apparatus has a disadvantage that it is hard to remove parts from the base metal plate without producing any burr because the upper roller is pushed downward and the parts are forced to be separated by being sheared from the base metal plate by the force pushing against the parts of the base metal plate.

Further, where a part is conveyed in a state that one end of the part is not separated from the base metal plate, another end of the part may hang obliquely from the former end to hit against the lower rollers, possibly damaging them.

Besides, the parts separated from the base metal plate drop, and it is troublesome to collect the dropped parts.

### SUMMARY OF THE INVENTION

It is an object of the invention to provide a part separating method and apparatus that parts are separated free from any burr from a base metal plate, lower rollers are not damaged even if there was a defective part when the parts are separated, and the parts separated from the base metal plate can be conveyed without being dropped and also a method for eliminating distortion from the parts.

It is another object of the invention to provide a part separating apparatus that preparation for eliminating distortion of the base metal plate and parts is simplified, and possibility of damaging the separated parts and the base metal plate can be eliminated.

### Technical Problems, Solving Means and Effects

The invention described in claim 1 is characterized in that when separating parts from a base metal plate by fabricating the outlines of the parts with uncut portions remained on the base metal plate; a pushing member is disposed on both sides of the base metal plate along the longitudinal direction of the base metal plate; the base metal plate is pushed by the pushing members to hold the base metal plate in a corrugated shape in the longitudinal direction of the base metal plate; and the base metal plate or the pushing members are moved back and forth in the longitudinal direction of the base metal plate.

In the invention described in claim 1, the base metal plate is sandwiched and pushed between the pushing members disposed on both sides. The base metal plate receives a bending force from the pushing members on both sides.

By reciprocating the base metal plate or the pushing members on both sides, a repeated stress is applied to the uncut portions of the base metal plate to cause metal fatigue so to cut off the parts at the uncut portions.

According to the invention described in claim 1, the base metal plate is largely deformed and the repeated stress is applied to the uncut portions of the base metal plate in the deformed state by holding the base metal plate in the corrugated state between the pushing members on both sides, thereby enabling to make cut-off without fail.

Since the uncut portions are cut off not by shearing but by fatigue caused by the repeated stress, production of burrs can be decreased, and post-processing can be omitted.

The invention described in claim 2 relates to the method for separating parts according to claim 1, which further comprises disposing at least two first pushing members on one side of the base metal plate in the longitudinal direction of the base metal plate; disposing at least one second pushing member, which is disposed between the first pushing members, on the other side of the base metal plate to oppose the first pushing members; holding the base metal plate between the pushing members to press it by the pushing members so to hold the base metal plate in a corrugated shape in its longitudinal direction; and moving the base metal plate or the pushing members back and forth in the longitudinal direction of the base metal plate.

In the invention described in claim 2, the base metal plate is sandwiched and pushed between at least two first pushing members and at least one second pushing member. The base metal plate receives a bending force from the first and second pushing members.

By reciprocating the base metal plate or the first and second pushing members, a repeated stress is applied to the uncut portions of the base metal plate to cause metal fatigue so to cut off the parts at the uncut portions.

According to the invention described in claim 2, the base metal plate is deformed into the corrugated shape and held between the at least two first pushing members and the at least one second pushing member so to largely deform the base metal plate and the repeated stress is applied to the uncut portions of the base metal plate in the deformed state, thereby enabling to make cut-off without fail.

Since the uncut portions are cut off not by shearing but by fatigue caused by the repeated stress, production of burrs can be decreased, and post-processing can be omitted.

The invention described in claim 3 relates to the method for separating parts according to claim 1, which further comprises disposing a first belt, which is put around a first roller group comprising a plurality of rollers in the longitudinal direction of the base metal plate, on one side of the base metal plate; disposing a second belt, which is put around a second roller group comprising a plurality of rollers arranged in a staggered configuration with the plurality of rollers of the first roller group, on the other side of the base metal plate to oppose the first belt; holding the base metal plate between both the belts to press it by both the belts so to hold the base metal plate in a corrugated shape in its longitudinal direction; and moving the base metal plate or both the belts back and forth in the longitudinal direction of the base metal plate.

In the invention described in claim 3, when the base metal plate is relatively reciprocated, it is guided in the corrugated shape held between the belt on one side and the belt on the other side.

According to the invention described in claim 3, it has the following effects in addition to those given by the invention described in claim 1.

First, since the base metal plate can be deformed along the corrugated shapes of the first belt and the second belt, it can be deformed evenly, and a uniform stress can be applied to the uncut portions of the base metal plate, thereby assuring the separation.

Second, even if the base metal plate is deformed into a corrugated shape, it can be moved back and forth smoothly without being caught by the rollers because it is guided between the first belt and the second belt each having the corrugated shape.

The invention described in claim 4 relates to the method for separating parts according to claim 1, which further comprises disposing an upper belt, which is put around an upper roller group comprising a plurality of rollers in the longitudinal direction of the base metal plate, on the upper side of the base metal plate; disposing a lower belt, which is put around a lower roller group comprising a plurality of rollers arranged in a staggered configuration with the plurality of rollers of the upper roller group, on the lower side of the base metal plate to oppose the upper belt; holding the base metal plate between both the belts to press it by both the belts so to hold the base metal plate in a corrugated shape in its longitudinal direction; and moving the base metal plate or both the belts back and forth in the longitudinal direction of the base metal plate.

In the invention described in claim 4, when the base metal plate is relatively reciprocated, it is guided in the corrugated shape while being held between the upper belt and the lower belt.

According to the invention described in claim 4, it has the following effects in addition to those given by the invention described in claim 1 and claim 2.

First, since the separated parts are held between the upper belt and the lower belt, they can be removed in a state in good order.

Second, since the parts are separated on the lower belt, the parts do not drop and can be prevented from being damaged by dropping.

The invention described in claim 5 relates to the method for separating parts according to claim 1, which further comprises disposing a first belt, which is put around a first roller group comprising a plurality of rollers in the longitudinal direction of the base metal plate, on one side of the base metal plate; disposing a second belt, which is put around a second roller group comprising a plurality of rollers arranged in a staggered configuration with the plurality of rollers of the first roller group, on the other side of the base metal plate to oppose the first belt; decreasing a space between both the belts to deform the base metal plate into a corrugated shape in its longitudinal direction, increasing the space between both the belts, moving the base metal plate or both the belts in the longitudinal direction of the base metal plate and decreasing the space between both the belts to deform the base metal plate into a corrugated shape in a reverse topology, and repeating these steps.

In the invention described in claim 5, even if the base metal plate is too thick to be bent, the base metal plate or the first and second belts are moved in the longitudinal direction of the base metal plate, and the base metal plate can be deformed into a corrugated shape or another corrugated shape in a reverse topology alternately by a sandwiching force between both the belts.

According to the invention described in claim 5, even if the base metal plate is too thick to be bent, the base metal plate can be deformed into a corrugated shape or another corrugated shape in a reverse topology alternately by a sandwiching force between the first belt and the second belt. And, a repeated stress applied to the uncut portions of the base metal plate can be increased to ensure the separation of the parts.

The invention described in claim 6 relates to a part separating apparatus, which comprises pushing members, which are disposed on both sides and in a longitudinal direction of a base metal plate having outlines of parts punched with uncut portions remained; a corrugating/restraining means, which approaches the pushing members to each other to press the base metal plate placed between the pushing members so to deform the base metal plate into a corrugated shape in its longitudinal direction and also holds the base metal plate in the corrugated shape; and a part separating means, which moves the base metal plate being held by the corrugating/restraining means or the pushing members being approached by the corrugating/restraining means back and forth in the longitudinal direction of the base metal plate.

In the invention described in claim 6, the same actions as in claim 1 are produced.

According to the invention described in claim 6, it has the same effects as claim 1.

The invention described in claim 7 relates to the part separating apparatus according to claim 6, which further comprises at least two first pushing members, which are disposed in the longitudinal direction of the base metal plate; at least one second pushing member, which is disposed to oppose and between the first pushing members; a corrugating/restraining means, which approaches both the pushing members to each other to press the base metal plate placed between both the pushing members so to deform the base metal plate into a corrugated shape in its longitudinal direction and also holds the base metal plate in the corrugated shape; and a part separating means, which moves the base metal plate being held by the corrugating/restraining means or the pushing members being approached by the corrugating/restraining means back and forth in the longitudinal direction of the base metal plate.

In the invention described in claim 7, the same actions as in claim 2 are caused.

According to the invention described in claim 7, the same effects as in claim 2 are provided.

The invention described in claim 8 relates to the part separating apparatus according to claim 6, which further comprises a first belt, which is put around a first roller group comprising a plurality of rollers disposed in the longitudinal direction of the base metal plate; a second belt, which is put around a second roller group comprising a plurality of rollers disposed to oppose the first belt and positioned in a staggered configuration with the plurality of rollers of the first roller group; a corrugating/restraining means, which approaches both the belts to each other to press the base metal plate placed between both the belts so to deform the base metal plate into a corrugated shape in its longitudinal direction and holds the base metal plate in the corrugated shape; and a part separating means, which moves the base metal plate being held by the corrugating/restraining means or both the belts being approached by the corrugating/restraining means back and forth in the longitudinal direction of the base metal plate.

In the invention described in claim 8, the same actions as in claim 3 are produced.

According to the invention described in claim 8, in addition to the effects of claim 6, the following effects are provided.

First, even if the base metal plate is deformed into a corrugated shape, the base metal plate can be moved back and forth smoothly without being caught by the rollers because it is relatively reciprocated in the corrugated shape between the first belt and the second belt.

Second, even if the base metal plate is deformed into a corrugated shape, the base metal plate can be moved back and forth smoothly without being caught by the rollers because it is guided between the first belt and the second belt each having the corrugated shape.

The invention described in claim 9 relates to the part separating apparatus according to claim 6, which further comprises an upper roller group, which comprises a plurality of rollers disposed in the longitudinal direction of the base metal plate; a lower belt, which is put around a lower roller group comprising a plurality of rollers disposed to oppose the upper roller group and positioned in a staggered configuration with the plurality of rollers of the upper roller group; a corrugating/restraining means, which approaches the upper roller group and the lower belt to each other to press the base metal plate placed between the upper roller group and the lower belt so to deform the base metal plate into a corrugated shape in its longitudinal direction and holds the base metal plate in the corrugated shape; and a part separating means, which moves the base metal plate being held by the corrugating/restraining means or the upper roller group and the lower belt being approached by the corrugating/restraining means back and forth in the longitudinal direction of the base metal plate.

In the invention described in claim 9, the base metal plate is deformed uniformly because the base metal plate can be deformed along the corrugated shape of the lower belt.

According to the invention described in claim 9, in addition to the effects of the invention described in claim 6, the parts separated from the base metal plate are positioned on the lower belt and do not drop, so that the parts can be prevented from being damaged by dropping.

The invention described in claim 10 relates to the part separating apparatus according to claim 6, which further comprises an upper belt, which is put around an upper roller group comprising a plurality of rollers disposed in the longitudinal direction of the base metal plate; a lower roller group comprising a plurality of rollers disposed to oppose the upper belt and positioned in a staggered configuration with the plurality of rollers of the upper roller group; a corrugating/restraining means, which approaches the upper belt and the lower roller group to each other to press the base metal plate placed between the upper belt and the lower roller group so to deform the base metal plate into a corrugated shape in the longitudinal direction of the base metal plate and holds the base metal plate in the corrugated shape; and a part separating means, which moves the base metal plate held by the corrugating/restraining means or the upper belt and the lower roller group mutually approached by the corrugating/restraining means back and forth in the longitudinal direction of the base metal plate.

In the invention described in claim 10, the base metal plate is deformed uniformly because the base metal plate can be deformed along the corrugated shape of the upper belt.

According to the invention described in claim 10, the same effects as those by the invention described in claim 7 are provided.

The invention described in claim 11 relates to the part separating apparatus according to claim 6, which further comprises an upper belt, which is put around an upper roller group comprising a plurality of rollers disposed in the longitudinal direction of the base metal plate; a lower belt, which is put around a lower roller group comprising a plurality of rollers disposed to oppose the upper belt and positioned in a staggered configuration with the plurality of rollers of the upper roller group; a corrugating/restraining means, which approaches both the belts to each other to press the base metal plate placed between both the belts so to deform the base metal plate into a corrugated shape in its longitudinal direction and holds the base metal plate in the corrugated shape; and a part separating means, which moves the base metal plate being held by the corrugating/restraining means or both the belts being approached by the corrugating/restraining means back and forth in the longitudinal direction of the base metal plate.

In the invention described in claim 11, when the base metal plate is relatively reciprocated, the base metal plate is held between the lower belt and the upper belt and guided in the corrugated shape. And, the base metal plate is uniformly deformed along the corrugated shape of both the belts.

According to the invention described in claim 11, in addition to the effects of the invention described in claim 8, the following effects are provided.

First, since the separated parts are held between the upper belt and the lower belt, they can be taken out in good order.

Second, since the parts are separated on the lower belt, they do not drop and can be prevented from being damaged by dropping.

Third, even when the base metal plate is moved back and forth with the back end of a part not separated from and still connected at the uncut portion to the base metal plate, another end of the part is sandwiched between the upper belt and the lower belt and guided between the upper belt and the lower belt. Therefore, the back end of the part does not hit the rollers, and the base metal plate can be moved back and forth smoothly.

Fourth, since the base metal plate is reciprocated by the lower belt and the upper belt, another reciprocating means is not required, and a space in a horizontal direction for the part separating means can be omitted.

Fifth, since the base metal plate has its entire surfaces contacted with the lower belt and the upper belt, friction is large, and a drive force for reciprocating the base metal plate can be made large.

The invention described in claim 12 relates to the part separating apparatus according to claim 11, which further comprises a space varying mechanism for adjusting the space between the lower belt and the upper belt.

In the invention described in claim 12, the space between the lower belt and the upper belt is adjusted by the space varying mechanism to adjust the depth of the corrugated base metal plate.

According to the invention described in claim 12, depending on a variety of thickness and material of the base metal plate, the space between the lower belt and the upper belt can be set to an appropriate level by the space varying mechanism, and a depth of the corrugated base metal plate can be changed readily.

The invention described in claim 13 relates to the part separating apparatus according to claim 12, wherein the space varying mechanism is mounted on a stationary frame body and suspends the upper conveyer which has the upper belt put around the upper roller group.

In the invention described in claim 13, a weight of the upper conveyer is applied to the base metal plate through the upper conveyer.

According to the invention described in claim 13, the weight of the upper conveyer can be used as a pushing force to the base metal plate to deform the base metal plate into the corrugated shape.

The invention described in claim 14 relates to the part separating apparatus according to claim 13, wherein the space varying mechanism has a cylinder mounted on the frame body and a link mechanism which is mounted on the frame body and suspends the upper conveyer to move it vertically by the cylinder.

In the invention described in claim 14, when the cylinder is operated, the upper conveyer is moved vertically through the link mechanism.

According to the invention described in claim 14, the space between the lower belt and the upper belt is small, and a stroke of the cylinder is determined according to this small space. Therefore, the link mechanism is determined to have a lever ratio of less than 1, so that a force of the cylinder for moving the weight of the upper conveyer can be decreased.

The invention of claim 15 relates to a method for eliminating distortion from parts when their outlines are fabricated with uncut portions remained on a base metal plate and separated from the base metal plate, which comprises disposing a first belt, which is put around a first roller group comprising a plurality of rollers in the longitudinal direction of the base metal plate, on one side of the base metal plate; disposing a second belt, which is put around a second roller group comprising a plurality of rollers arranged in a staggered configuration with the plurality of rollers of the first roller group, on the other side of the base metal plate to oppose the first belt; holding the base metal plate between both the belts to press it by both the belts so to hold the base metal plate in a corrugated shape in its longitudinal direction; moving the base metal plate or both the belts back and forth in the longitudinal direction of the base metal plate to separate the parts from the base metal plate; and setting the space between both the belts to a level larger than that when the parts are separated to move the base metal plate and the parts in the longitudinal direction of the base metal plate.

According to the invention described in claim 15, even if the parts and the base metal plate are deformed after separating the parts from the base metal plate, distortion can be eliminated to make them flat.

The invention described in claim 16 relates to the part separating apparatus according to claim 6, which further comprises a first belt, which is put around a first roller group comprising a plurality of rollers disposed in the longitudinal direction of the base metal plate; a second belt, which is put around a second roller group comprising a plurality of rollers disposed to oppose the first belt and positioned in a staggered configuration with the plurality of rollers of the first roller group; a corrugating/restraining means, which approaches both the belts to each other to press the base metal plate placed between both the belts so to deform the base metal plate into a corrugated shape in its longitudinal direction and holds the base metal plate in the corrugated shape; and a part separating/discharging means, which moves the base metal plate being held by the corrugating/restraining means or both the belts being approached by the corrugating/restraining means back and forth in the longitudinal direction of the base metal plate to separate the parts from the base metal plate, and discharges the base metal plate and the parts in the longitudinal direction of the base metal plate while retaining the space between both the belts; wherein the termination of the second roller group has the roller at the termination positioned away from the roller at the termination of the first roller group toward the work discharge side; and pitch P2 of two rollers of the second roller group ranging over the roller at the termination of the first roller group is larger than pitch P1 between the roller at the termination of the first roller group and the roller just before the roller at the termination.

In the invention described in claim 16, the base metal plate or the first and second belts are reciprocated in the longitudinal direction of the base metal plate to separate the parts from the base metal plate, and the the base metal plate and the parts are discharged in the longitudinal direction of the base metal plate by the part separating/discharging means while holding the space between the first belt and the second belt. The discharged parts and base metal plate have remaining distortion into the arched shape.

When discharging, the amount of deflection in the arched shape of the parts and base metal plate is decreased by the roller at the termination of the first roller group and the roller on the discharge side between the two rollers having the pitch P2 of the second roller group to eliminate the distortion of the parts and base metal plate.

Here, when a change (an increased amount) of the second pitch is increased, a stress applied to the parts and base metal plate is decreased, and remaining distortion is also decreased.

According to the invention described in claim 16, the pitch P2 of the two rollers of the second roller group ranging over the roller at the termination of the first roller group is larger than the pitch P1 between the roller at the termination of the first roller group and the roller just before the termination, so that the amount of deflection in the arched shape of the base metal plate and parts discharged in the longitudinal direction of the base metal plate is decreased, and distortion can be eliminated.

As a result, a conventional step for setup change after the separation of parts can be omitted, and it is effective that the separated parts and base metal plate can be prevented from being damaged.

Besides, by using the operation for discharging the parts and the base metal plate, distortion of the parts and base metal plate can be eliminated. Therefore, it is not necessary to install another distortion eliminating machine on the next step alter discharging the parts and the base metal plate, enabling to make labor saving for the distortion eliminating work.

The invention described in claim 17 relates to the part separating apparatus according to claim 16, wherein between the two rollers forming the pitch P2, the one on the discharge side is mounted to be movable and stationary as desired.

In the invention described in claim 17, the roller on the discharging side between the two rollers forming the pitch P2 is moved to an appropriate position and fixed according to the thickness and the like of the base metal plate and parts. Thus, the pitch P2 is changed.

According to the invention described in claim 17, it has an effect to change the pitch P2 of the two rollers of the second belt by readily adjusting according to the conditions such as the thickness and the like of the base metal plate and parts.

### BRIEF DESCRIPTION OF THE DRAWINGS

Fig. 1 is a sectional side view of the part separating apparatus according to an embodiment of the invention;
Fig. 2 is a front view of the part separating apparatus;
Fig. 3 is a side view of the part separating apparatus according to the embodiment of the invention;
Fig. 4 is an explanatory diagram showing a state that an upper conveyer of the part separating apparatus is raised to have a space D(1) from a lower conveyer;
Fig. 5 is an explanatory diagram showing a state that the upper conveyer of the part separating apparatus is lowered to have a space D(2) from the lower conveyer;
Fig. 6 is an explanatory diagram of a method for eliminating distortion from parts;

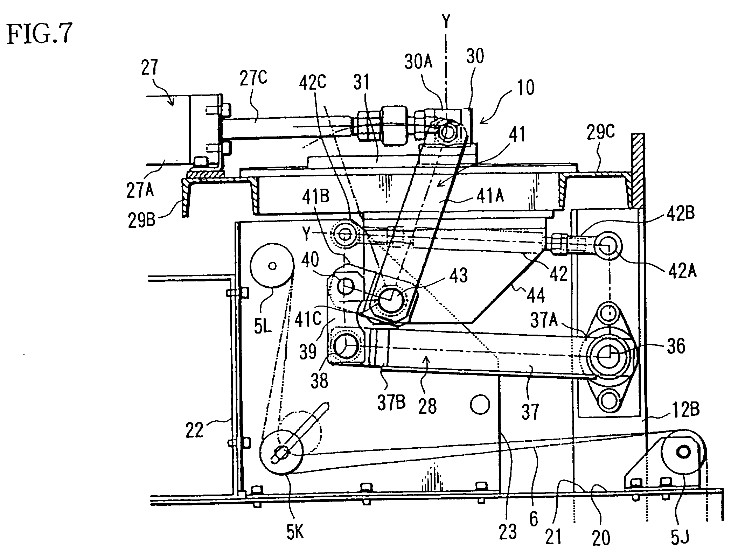

Fig. 7 is a side view showing a space varying mechanism of the part separating apparatus;

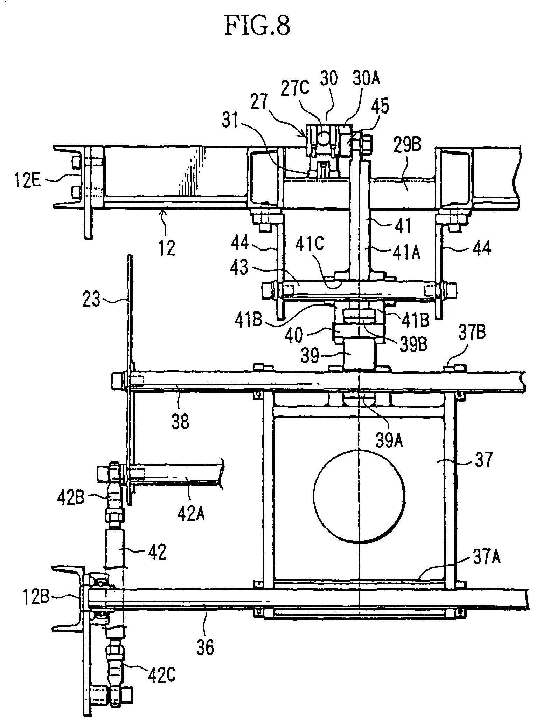

Fig. 8 is an explanatory sectional view taken on line Y-Y of the space varying mechanism of Fig. 7;
Fig. 9 is a diagram showing test data to show relationships between an amount of deflection and the number of repeated bending times;
Fig. 10 is an explanatory side view showing a modification of a part separating means;
Fig. 11 is an explanatory side view showing a modification of the space varying mechanism;
Fig. 12 is an explanatory diagram of the part separating method according to an embodiment of the invention described in claim 2;
Fig. 13 is an explanatory diagram of the part separating method according to another embodiment of the invention described in claim 2;
Fig. 14 is an explanatory diagram of main components of the part separating apparatus according to an embodiment of the invention described in claim 8;
Fig. 15 is an explanatory diagram of main components of the part separating apparatus according to an embodiment of the invention described in claim 9;
Fig. 16 is a plan view of a base metal plate with parts not removed;
Fig. 17 is a plan view of a base metal plate with parts separated;
Fig. 18 is a plan view of a part;
Fig. 19 is a side view showing a part separating apparatus according to the invention described in claims 16, 17;
Fig. 20 is a plan view showing main components of the part separating apparatus;
Fig. 21 is a side view showing main components of the part separating apparatus;
Fig. 22 is a sectional view taken on line Z-Z of Fig. 20;
Fig. 23 is an explanatory diagram showing the base metal plate and parts deformed to have a corrugated shape when removed after raising the upper conveyer and;
Fig. 24 is an explanatory diagram showing an amount of deflection of the base metal plate and parts in a case that a second pitch is varied;
Fig. 25 is an explanatory diagram of the second pitch varied in testing;
Fig. 26 is a diagram graphically showing data of Table 1;
Fig. 27 is a diagram graphically showing data of Table 2; and
Fig. 28 is a diagram graphically showing data of Table 3.

### DESCRIPTION OF PREFERRED EMBODIMENTS

Embodiments of the invention will be described with reference to the accompanying drawings.

### Embodiment 1:

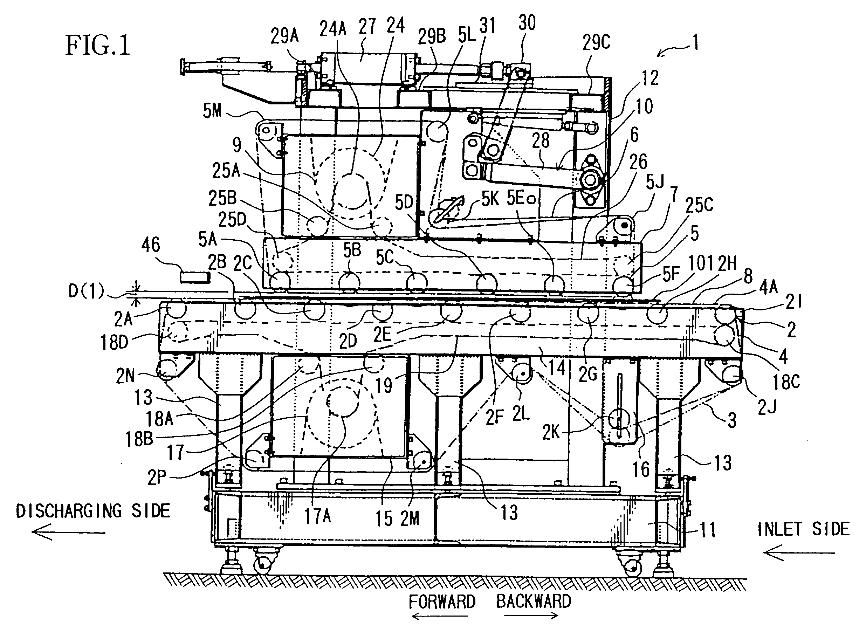

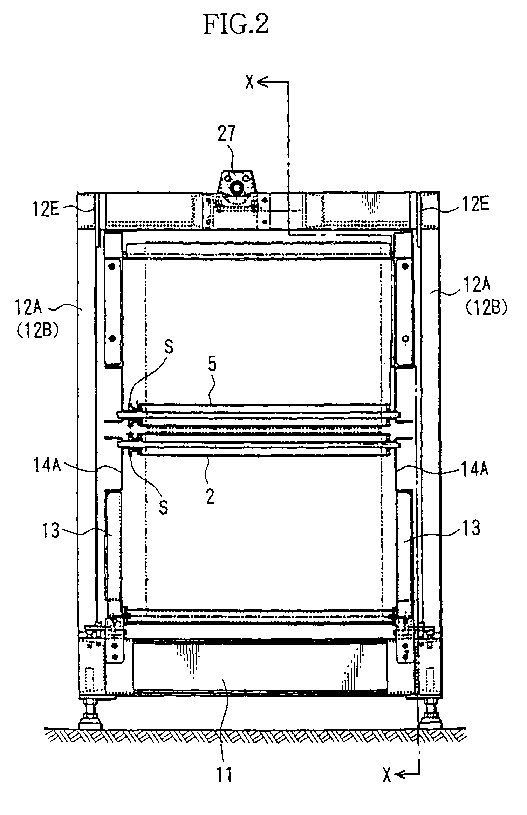

Descriptions will be made of a part separating method according to embodiments of the invention described in claim 1 through claim 5, a part separating apparatus according to embodiments of the invention described in claims 6 to 8 and 10 through 14, and a method for eliminating distortion from parts according to an embodiment of the invention described in claim 15. Fig. 1 is a sectional view taken on line X-X of Fig. 2.

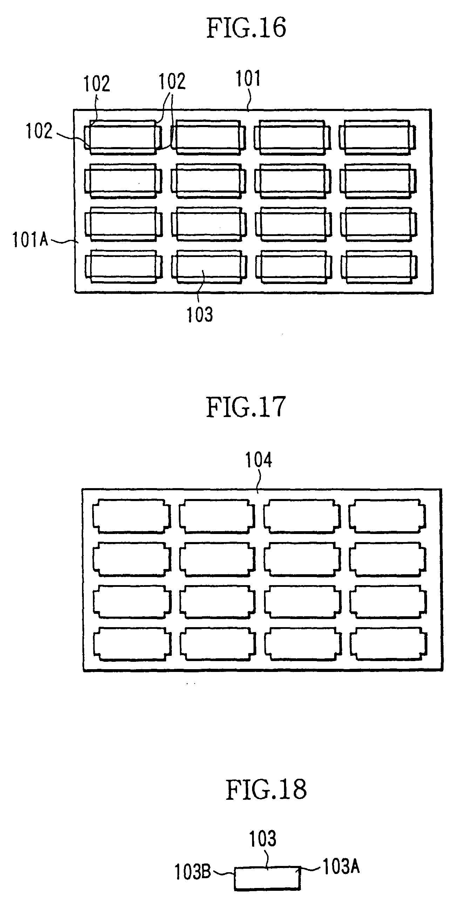

In the drawings, reference numeral 1 is a part separating apparatus. The part separating apparatus 1 is an apparatus for separating a plurality (16 in this example) of parts 103 at uncut portions 102, 102, 102, 102 from a rectangular base metal plate 101 shown in Fig. 16.

A lower belt 3 is put around a lower roller group 2 to form a lower conveyer 4 on the lower side. An upper belt 6 is put around an upper roller group 5 to form an upper conveyer 7.

The part separating apparatus 1 has a corrugating/restraining means 8 which holds the base metal plate 101 in a state deformed into a corrugated shape in its longitudinal direction by sandwiching the base metal plate between the lower conveyer 4 and the upper conveyer 7 and forcing the upper conveyer 7 against the lower conveyer 4, a part separating means 9 for reciprocating the base metal plate 101 held by the corrugating/restraining means 8 along the longitudinal direction of the base metal plate 101, and a space varying mechanism 10 for determining a space D(X) (X=1, 2, 3, · · · ) between the lower conveyer 4 and the upper roller group 5.

Descriptions will be made in further detail.

The part separating apparatus 1 has a base plate 11, to which a substantially cubic frame body 12 is fixed. The frame body 12 comprises right and left vertical frames 12A, 12A, right and left vertical frames 12B, 12B, a front frame 12C, a back frame 12D and right and left transverse frames 12E, 12E.

A lower frame 14 is supported on the base plate 11 by means of supporting members 13, 13, 13.

The lower frame 14 comprises right and left lower side members 14A, 14A which pierce through the inside of the frame body 12, a box body 15 which is fixed to the lower side members 14A, 14A, and a bracket 16 which is fixed to the right and left lower side members 14A, 14A.

The lower roller group 2 is positioned on the right and left lower side members 14A, 14A. The lower roller group 2 comprises rollers 2A, 2B, 2C, 2D, 2E, 2F, 2G, 2H, 2I disposed on the right and left lower side members 14A, 14A. The rollers 2A, 2B, 2C, 2D, 2E, 2F, 2G, 2H, 2I have the same diameter. And, the rollers 2A, 2B, 2C, 2D, 2E, 2F, 2G, 2H, 2I are disposed at the same roller interval L.

A roller 2J is mounted at a lower part of the front end of the right and left lower side members 14A, 14B. A roller 2K is mounted at the bottom end of the bracket 16. A roller 2L is mounted at the lower portion of the center between the right and left lower side members 14A, 14A. A roller 2M is mounted on the lower portion at the front end of the box body 15. A roller 2N is mounted at the lower portion of the back end of the right and left lower side members 14A, 14A. A roller 2P is mounted at the lower portion of the back end of the box body 15. The lower belt 3 is put around the lower roller group 2 and the rollers 2J, 2K, 2L, 2M, 2N, 2P to configure the lower conveyer 4.

A motor 17 is positioned in the box body 15, and sprockets 18A, 18B are positioned above the motor 17. Sprockets 18C, 18D are positioned on the lower side members 14A, 14A.

A chain 19 is put around an output shaft 17A of the motor 17 and the sprockets 18A, 18B, 18C, 18D. Sprockets S, which are fixed to the shaft ends of rollers 2A, 2B, 2C, 2D, 2E, 2F, 2G, 2H, 2I of the lower roller group 2, are engaged with the chain 19. In the lower conveyer 4, the rollers 2A, 2B, 2C, 2D, 2E, 2F, 2G, 2H, 2I of the lower roller group 2 are rotated by the drive force of the motor 17 through the chain 19, and the lower belt 3 is driven by the rotating force of the rollers 2A, 2B, 2C, 2D, 2E, 2F, 2G, 2H, 2I of the lower roller group 2.

The space varying mechanism 10 to be described afterward is mounted on the frame body 12. An upper frame 20 is cantilevered by the space varying mechanism 10.

The upper frame 20 comprises the right and left upper side members 21, 21 piercing through the frame body 12, a box body 22 fixed to the upper side members 21, 21, and right and left supporting plates 23, 23 which are fixed from the right and left upper side members 21, 21 to the box body 22.

The upper roller group 5 is disposed at the lower portion of the right and left upper side members 21, 21. The upper roller group 5 comprises rollers 5A, 5B, 5C, 5D, 5E, 5F formed on the right and left upper side members 21, 21. The rollers 5A, 5B, 5C, 5D, 5E, 5F have the same diameter which is equal to the diameters of the rollers 2A, 2B, 2C, 2D, 2E, 2F, 2G, 2H, 2I. The rollers 5A, 5B, 5C, 5D, 5E, 5F are formed at the same interval L. And, the rollers 5A, 5B, 5C, 5D, 5E, 5F are staggered with respect to the rollers 2A, 2B, 2C, 2D, 2E, 2F, 2G, 2H, 2I by a half (0.5 pitch) of the interval L in a longitudinal direction of the base metal plate 101. Thus, the upper conveyer 7 can be forced against the lower conveyer 4 to deform the base metal plate 101 into a corrugated shape.

A roller 5J is mounted at the upper part of the front end of the right and left upper side members 21, 21, a roller 5K is mounted on the right and left supporting plates 23, 23, a roller 5L is mounted at the lower part of the front end of the box body 22, and a roller 5M is mounted at the upper part of the back end of the box body 22.

The lower belt 3 is put around the upper roller group 5 and the rollers 5J, 5K, 5L, 5M to configure the upper conveyer 7.

A motor 24 is disposed within the box body 22, sprockets 25A, 25B are disposed beneath the motor 24, and sprockets 25C, 25D are disposed on the upper side members 21, 21.

A chain 26 is put around an output shaft 24A of the motor 24 and the sprockets 25A, 25B, 25C, 25D, and sprockets S fixed to the shaft ends of the rollers 5A, 5B, 5C, 5D, 5E, 5F of the upper roller group 5 are engaged with the chain 26. In the upper conveyer 7, the rollers 5A, 5B, 5C, 5D, 5E, 5F of the upper roller group 5 are rotated by the drive force of the motor 24 through the chain 26, and the upper belt 6 is driven by the rotating force of the rollers 5A, 5B, 5C, 5D, 5E, 5F of the upper roller group 5.

Thus, the part separating means 9 comprises the lower roller group 2, the motor 17, the sprockets 18A, 18B, 18C, 18D, the chain 19, the lower belt 3, the upper roller group 5, the motor 24, the sprockets 25A, 25B, 25C, 25D, the chain 26, and the upper belt 6.

The space varying mechanism 10 will be described below.

The space varying mechanism 10 comprises a cylinder which is an air cylinder 27 of a double end rod type and a link mechanism 28 which is operated by the air cylinder 27.

The air cylinder 27 is disposed horizontally and comprises a cylinder tube 27A and rods 27B, 27C which expand and contract from both ends of the cylinder tube 27A. A vertical space can be saved because the air cylinder 27 is disposed horizontally. The cylinder tube 27A is mounted on cross members 29A, 29B which are fixed to the right and left transverse frames 12E, 12E of the frame body 12. A key 30 is formed at the leading end of the rod 27C so to slide along a guide member 31 which is mounted on the cross members 29B, 29C fixed to the upper end of the frame body 12. A groove 30A is formed on the side surface of the key 30.

A stopper 33 is mounted on the side surface of the cross member 29A through a bracket 32. The stopper 33 comprises a female screw 34 fixed to the bracket 32 and a bolt 35 which is threaded with the female screw 34 and horizontally adjustable. The rod 27B of the air cylinder 27 comes in contact with an end 35A of the bolt 35 of the stopper 33.

The link mechanism 28 has a first shaft 36, a support plate 37, a second shaft 38, a connection link 39, a pin 40, a first link member 41, a second link member 42, a third shaft 43, and a fourth shaft 42A. The first shaft 36 is rotatably stretched between the right and left vertical frames 12B, 12B. One end 37A of the support plate 37 is connected with the first shaft 36 in such a way that the support plate 37 is freely rotatable with the first shaft 36 as its axis. The second shaft 38 is mounted on the right and left support plates 23, 23, and another end 37B of the supporting plate 37 connected to the second shaft 38 so to be rotatable. The third shaft 43 is stretched between brackets 44, 44 which are fixed to the frame body 12.

The first link member 41 comprises a link body 41A and a pair of plate pieces 41B, 41B which are bent at right angles toward the link body 41A and have a shaft hole 41C. The first link member 41 is pivotably supported by the third shaft 43 via the shaft holes 41C. A roller 45 disposed at one end of the link body 41A of the first link member 41 is engaged with the groove 30A of the key 30 so to be slidable vertically.

One end 39A of the connection link 39 is connected to the second shaft 38 so to be rotatable. Another end 39B of the connection link 39 is connected to the plate pieces 41B, 41B of the first link member 41 by means of the pin 40.

The fourth shaft 42A is stretched between the right and left support plates 23, 23. Ends 42B, 42B of the second link members 42, 42 are rotatably connected to the fourth shaft 42A. Other ends 42C, 42C of the second link members 42, 42 are rotatably connected to the right and left vertical frames 12B, 12B with a shaft. The second link members 42 are parallel to the support plate 37 and pivot about the ends 42C, 42C in association with the pivot of the support plate 37.

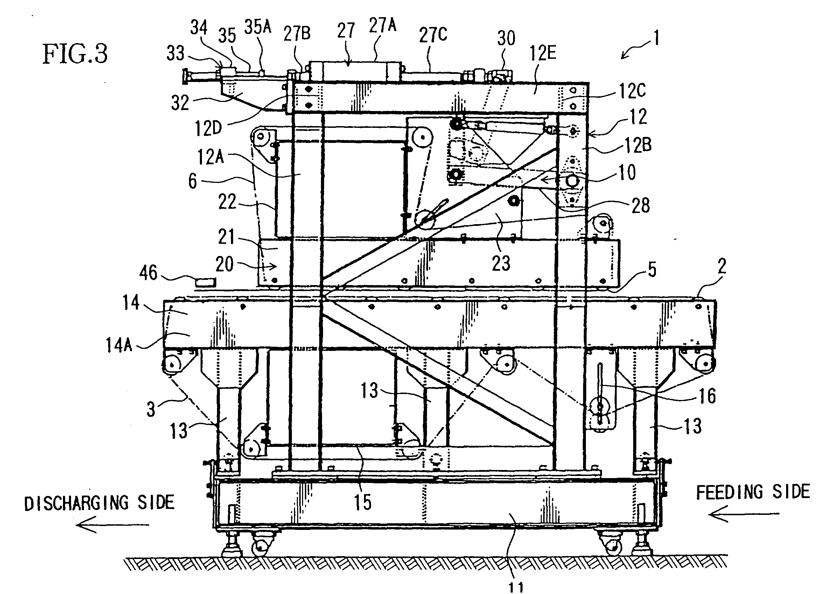

As shown in Fig. 3, the lower side member 14A has a proximity switch 46 for detecting a front end 101A of the base metal plate 101 on a discharging side of the base metal plate 101. The proximity switch 46 is connected to a control device (not shown). A program is installed in the control device to reciprocate the base metal plate 101 by sequentially performing the activation of the space varying mechanism 10 and the drive and stop of the motors 17, 24.

Action of this embodiment will be described.

First, description will be made of a case that the base metal plate is thin (e.g., 0.5 mm to 2.0 mm).

Work to be processed is shown in Fig. 16. In the drawing, the rectangular base metal plate 101 is punched to form a plurality (16 in this embodiment) of parts 103. Each part 103 has four uncut portions 102, 102, 102, 102. The size of the base metal plate 101 in its longitudinal direction is larger than that in its breadth direction.

The 16 parts 103 are separated at the uncut portions 102, 102, 102, 102 from the base metal plate 101 by the part separating apparatus 1 (Fig. 18), and the base metal plate 101 remains as a plate material 104 with the 16 parts 103 removed (Fig. 17).

Description will be made in further detail.

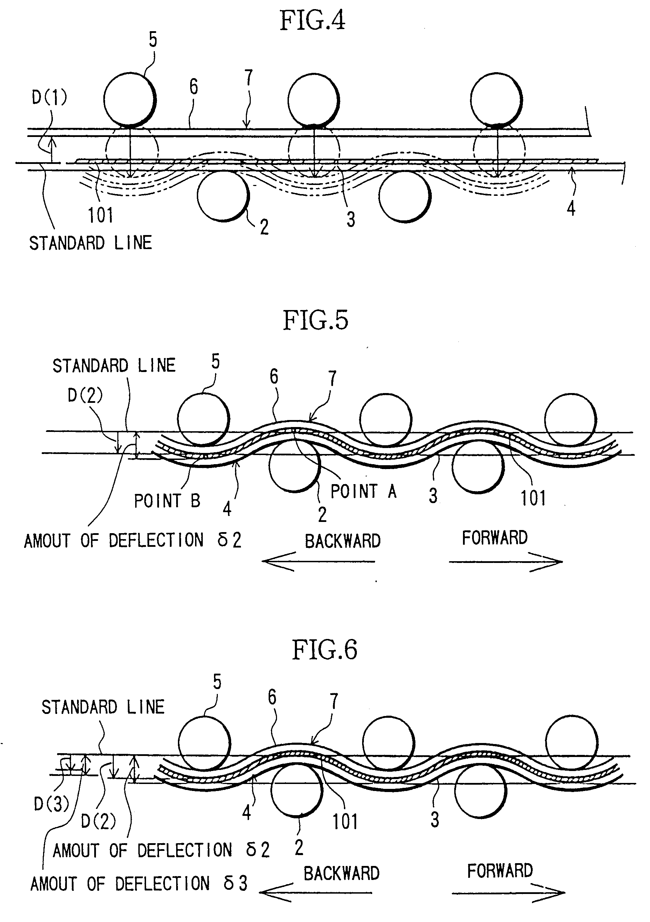

The control device is set to a thin plate mode. As shown in Fig. 1, the rod 27C of the air cylinder 27 is extended so that the upper conveyer 7 is raised upward by the space varying mechanism 10. Space D(1) is thus formed between the upper conveyer 7 and the lower conveyer 4 (Fig. 4).

The base metal plate 101 is placed at an inlet 4A of the lower conveyer 4. The lower conveyer 4 is activated to convey the base metal plate 101 into the part separating apparatus 1 and sandwiched between the upper conveyer 7 and the lower conveyer 4. When the front end 101A of the base metal plate 101 reaches the proximity switch 46, the lower conveyer 4 stops moving.

Subsequently, the space varying mechanism 10 is instructed to operate by the control device. Specifically, the air cylinder 27 is operated by the space varying mechanism 10 to retract the rod 27C of the air cylinder 27. The first link member 41 is pivoted about the third shaft 43, the support plate 37 is pivoted through the connection link 39, and the right and left support plates 23, 23 are lowered. Thus, the upper frame 20 is lowered. In this way, the upper frame 20 is lowered through the link mechanism 28. The upper conveyer 7 is lowered as the upper frame 20 is lowered, and the space D(1) (positive value) between the upper conveyer 7 and the lower conveyer 4 is decreased to space D(2) (Fig. 5). The upper conveyer 7 and the lower conveyer 4 are overlaid vertically, and the space D(2) has a negative value.

Here, a depth of the corrugated shape of the base metal plate 101, namely an amount of deflection, is determined by adjusting an amount of the space D(X). Specifically, the bolt 35 of the stopper 33 is moved back and forth to extend and contract a distance between the end 35A of the bolt 35 and the end of the rod 27B of the air cylinder 27. The end 35A and the end of the rod 27B are designed to come in contact with each other. Thus, a stroke of the air cylinder 27 is adjusted, and the amount of deflection is adjusted accordingly.

As shown in Fig. 5, the base metal plate 101 is pushed downward by the upper conveyer 7 so to be sandwiched between the upper and lower conveyers 7, 4 and retained by the corrugating/restraining means 8 in a state deformed to have a corrugated shape. A bending stress is produced in the base metal plate 101.

A weight of the upper conveyer 7 is applied to the base metal plate 101 through the space varying mechanism 10 and the upper conveyer 7 and also used as a pushing force against the base metal plate 101 to deform it into the corrugated shape.

In the state that the base metal plate 101 is deformed into the corrugated shape by the corrugating/restraining means 8, the upper and lower conveyers 7, 4 are instructed by the control device to move forward (the left-hand direction in Fig. 1) at the same time so to convey the base metal plate 101 forward by virtue of friction between the upper and lower conveyers 7, 4. The base metal plate 101 is stopped after advancing by 1.5 pitches (1 pitch = the roller interval L of the upper conveyer 7 or the lower conveyer 4).

Then, the base metal plate 101 deformed into the corrugated shape by the corrugating/restraining means 8 is moved backward by friction of the upper and lower conveyers 7, 4 when they are instructed by the control device to move backward simultaneously (the right-hand direction in Fig. 1).

In the state that the base metal plate 101 is deformed into the corrugated shape by the corrugating/restraining means 8, repulsion applied from the base metal plate 101 to the upper conveyer 7 is received by a pressure in an air chamber (not shown) of the air cylinder 27 through the link mechanism 28 of the space varying mechanism 10.

Thus, the base metal plate 101 is repeated to move back and forth several times. While reciprocally moving, the base metal plate 101 is held between the upper and lower belts 6, 3, guided in the corrugated shape while being pushed between the upper and lower belts 6, 3, and uniformly deformed along the corrugated shapes of the upper and lower belts 6, 3.

As to the uncut portions 102 of the base metal plate 101, a bending force in a predetermined direction and a bending force in the opposite direction are alternately applied to the uncut portions 102 while the base metal plate 101 is reciprocally moving. Specifically, a repeated force is applied by the upper and lower conveyers 7, 4 to cause metal fatigue in the base metal plate 101 to cut off at the uncut portions 102 , thereby separating the parts 103 from the base metal plate 101.

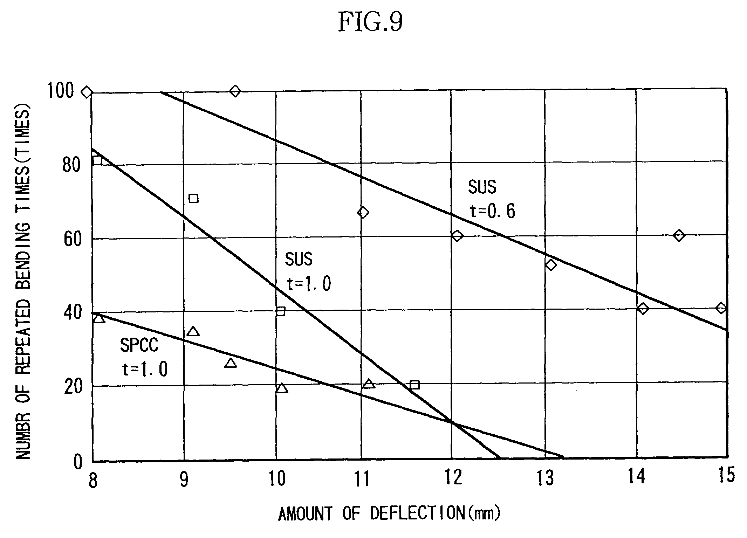

Fig. 9 shows some examples of relations of the number of repeated bending times with respect to the amount of deflection (Fig. 5) when the parts 103 are separated from the base metal plate 101, namely a depth of corrugated shape of the base metal plate 101 produced when the upper conveyer 7 is engaged in the lower conveyer 4. The base metal plate 101 is made of SUS or SPCC and 0.6 mm and 1.0 mm in thickness (t). For example, when the base metal plate 101 is made of SPCC and has a thickness (t) of 1.0 mm, the parts 103 are separated from the base metal plate 101 by the number of repeated bending times of 40 when the amount of deflection is set to 8 mm. Where the rollers are configured as shown in Fig. 4 to Fig. 6, the base metal plate 101 is reciprocated through the roller groups for ten times to achieve the number of repeated bending times of 40.

When the parts 103 are separated from the base metal plate 101, the upper conveyer 7 is raised by the space varying mechanism 101 into the states as shown in Fig. 1 and Fig. 4.

Subsequently, the lower conveyer 4 is driven forward to discharge the parts 103 and the plate material 104, which are then discharged out of the part separating apparatus 1.

At this time, the parts 103 are separated in the state sandwiched between the upper conveyer 7 and the lower conveyers 4, so that the separated parts 103 are not overlaid on one another or on the plate material 104. The parts 103 are in order with respect to the plate material 104 and discharged by the lower conveyer 4.

Description will be made of the base metal plate 101 having a large thickness (e.g., 2.0 mm to 5 mm).

The control device is set to a thick plate mode. As shown in Fig. 1, the upper conveyer 7 is raised by the space varying mechanism 10 to have space D(1) between the upper conveyer 7 and the lower conveyer 4.

The base metal plate 101 is placed on the inlet 4A of the lower conveyer 4. The lower conveyer 4 is activated to convey the base metal plate 101 into the part separating apparatus 1. When the front end 101A of the base metal plate 101 reaches the proximity switch 46, the lower conveyer 4 stops moving.

Subsequently, the upper conveyer 7 is lowered by the operation of the air cylinder 27 of the space varying mechanism 10, the base metal plate 101 is pushed by the upper conveyer 7 and deformed into a corrugated shape between the upper and lower conveyers 7, 4. Thus, a bending stress is produced in the base metal plate 101.

After raising the upper conveyer 7 according to the instruction given by the control device, the upper and lower conveyers 7, 4 are driven backward (the right-hand direction in Fig. 1) at the same time, and the base metal plate 101 is moved backward by friction between the upper conveyer 7 and the lower conveyer 4.

As shown in Fig. 5, the base metal plate 101 is moved backward (from point B to point A of the base metal plate 101) by 0.5 pitch (one pitch = a half of the roller interval L of the upper conveyer 7 or the lower conveyer 4) and stopped.

Subsequently, the upper conveyer 7 is lowered by the operation of the air cylinder 27 of the space varying mechanism 10 to push down the base metal plate 101 by the upper conveyer 7, and the base metal plate 101 is deformed into a corrugated shape by being sandwiched between the upper and lower conveyers 7, 4.

Being instructed by the control device, the upper conveyer 7 and the lower conveyer 4 are driven forward (the left-hand direction in Fig. 1) at the same time, and the base metal plate 101 is advanced forward by 0.5 pitch.

Thus, the base metal plate 101 is repeatedly reciprocated back and forth by 0.5 pitch for several times.

As to the uncut portions 102 of the base metal plate 101, a bending force and a second bending force in the opposite direction are alternately applied to the uncut portions 102 by the forward and backward movements of the base metal plate 101 because the base metal plate 101 (or the rollers) is reciprocated. In other words, the repeated force is applied by the upper conveyer 7 and the lower conveyer 4 to cause metal fatigue in the base metal plate 101, and the parts 103 are cut off at the uncut portions 102 and separated from the base metal plate 101.

Therefore, even if the base metal plate 101 is too thick to be bent, it can be deformed into a corrugated shape or another corrugated shape in a reverse topology alternately by a sandwiching force between the upper belt 6 and the lower belt 3. And, the repeated stress applied to the uncut portions 102 of the base metal plate 101 can be increased to ensure the separation of the parts 103.

As a method of using the part separating apparatus 1, description will be made of a method to eliminate distortion from parts with reference to Fig. 6.

Depending on a thickness (thin) or material of the base metal plate 101, distortion may remain in the parts 103 and the base metal plate 101. In such a case, distortion is eliminated from the parts 103 and the base metal plate 101 as follows.

First, the base metal plate 101 deformed in the corrugated shape is set by the space varying mechanism 10 of the part separating apparatus 1. The space between the upper belt 6 and the lower belt 3 is adjusted to D(2), and the base metal plate 101 is reciprocated to separate the parts 103 from the base metal plate 101.

Then, as shown in Fig. 5 and Fig. 6, the space between the upper belt 6 and the lower belt 3 is adjusted to D(3) larger than the space D(2) set for the separation of parts by the space varying mechanism 10.

The amount of deflection δ 2 of the base metal plate 101 is related to the space D(2). The amount of deflection δ 3 of the base metal plate 101 is related to the space D(3). The amount of deflection is equivalent to the corrugated depth of the base metal plate 101. The amount of deflection δ 3 is smaller than the amount of deflection δ 2 determined when the parts 103 are cut off. In other words, the space D(2) < the space D(3), and the amount of deflection δ 2 > the amount of deflection δ 3 (the space has a positive or negative value, and the amount of deflection has a positive value only).

In the state as described above, the base metal plate 101 and the parts are discharged from the apparatus while forming a corrugated passage. While being discharged from the apparatus, the parts 103 and the base metal plate 101 are wholly pressed by the upper and lower conveyers 7, 4 in such a way that distortion of the parts 103 and the base metal plate 101 is eliminated so to make them flat. This elimination of distortion is particularly effective when the parts 103 are long in size.

For example, when the base metal plate 101 is made of a SUS material having a thickness of 1.0 mm, an optimum value is determined taking a separation time taken into account when the upper conveyer 7 is lowered to separate the parts 103 and the base metal plate 101 is set to have an amount of deflection of 10 mm ( δ 2). After completing the separation, when the parts 103 are taken out in the state that the amount of deflection is set to 10 mm ( δ 2), distortion which is largely warped into one direction remains in a size of 3 to 4 mm on the parts 103 having a size of 900 mm in the forwarding direction.

Therefore, the upper conveyer 7 is raised and the amount of deflection is eliminated to 0 mm before the parts 103 are taken out, but the parts 103 still have a corrugated shape, indicating remaining deflection. Thus, there is a problem in view of processing accuracy.

As a method of eliminating deflection, when the parts 103 are taken out of the part separating apparatus 1 after the separation work, a lowering level of the upper conveyer 7 is adjusted to change the amount of deflection from 10 mm ( δ 2) to 8 mm ( δ 3), then the parts 103 can be taken out in a state that remaining deflection is eliminated.

This tendency is also applied when the SPCC material is used.

Similarly, when the base metal plate 101 is made of the SUS material having a thickness of 0.6 mm and the parts 103 are taken out of the part separating apparatus 1 which is set to the amount of deflection of 14 mm ( δ 2), the parts 103 having a size of 900 mm in the forwarding direction have remaining deflection of 35 to 40 mm warped largely in one direction.

Therefore, the upper conveyer 7 is raised upward to eliminate the amount of deflection to 0 mm, then the parts 103 are taken out. But, the parts 103 still have remaining deflection in the corrugated shape. Thus, working precision is defective.

Under the circumstances, the upper conveyer 7 is adjusted to change the amount of deflection from 14 mm ( δ 2) to 8 mm ( δ 3) before taking out the parts 103. Thus, the parts 103 can be taken out with the remaining deflection eliminated from them.

As described above, by using the part separating apparatus 1 after separating the parts 103 from the base metal plate 101, distortion can be eliminated to make the parts 103 and the base metal plate 103 flat even if they are warped.

The configuration described above has the following effects.

First, deformation of the base metal plate 101 is enhanced by holding the base metal plate 101 in the corrugated state between the upper conveyer 7 and the lower conveyer 4, and the repeated stress is applied to the uncut portions 102 of the base metal plate 101 held in the above state to ensure the separation.

Second, the uncut portions 102 of the base metal plate 101 are not cut off by shearing but cut off as a result of fatigue by the application of the repeated stress. Therefore, production of burrs is decreased and post-processing can be eliminated.

Third, even a base metal plate 101 which is deformed into a corrugated shape can be reciprocally moved smoothly between the rollers 2A, 2B, 2C, 2D, 2E, 2F, 2G, 2H, 2I of the lower roller group 2 and the rollers 5A, 5B, 5C, 5D, 5E, 5F of the upper roller group 5 because the base metal plate 101 is relatively reciprocated in the corrugated shape between the upper belt 6 and the lower belt 3.

Fourth, even when the base metal plate 101 is moved back and forth with one end 103A of the part 103 not separated from and still connected at the uncut portion 102 to the base metal plate 101, another end 103B of the part 103 is sandwiched between and guided by the upper belt 6 and the lower belt 3. Therefore, the end 103B of the part 103 does not hit the rollers 2A, 2B, 2C, 2D, 2E, 2F, 2G, 2H, 2I of the lower roller group 2, and the base metal plate 101 can be moved back and forth smoothly.

Fifth, since the separated parts 103 are sandwiched between the upper belt 6 and the lower belt 3, the separated parts 103 are not overlaid on the plate material 104 or not overlaid on one another, and the plurality of parts 103 can be taken out in good order.

Sixth, since the parts 103 are separated on the lower belt 3, they do not drop and can be prevented from being damaged by dropping.

Seventh, since the base metal plate 101 is reciprocated by the lower belt 3 and the upper belt 6, no additional reciprocating means is required, eliminating a horizontal space for the part separating means 9.

Eighth, the base metal plate 101 has its entire surfaces contacted with the lower belt 3 and the upper belt 6, so that friction is large enough to increase the drive force for reciprocating the base metal plate 101.

Ninth, depending on a variety of thickness and material of the base metal plate 101, the space between the upper conveyer 7 and the lower conveyer 4 can be set to an appropriate level by the space varying mechanism 10, and a depth of the corrugated base metal plate 101 can be changed readily.

Tenth, the upper conveyer 7 is suspended by the space varying mechanism 10, so that the weights of the upper conveyer 7 and the upper frame 20 can be used as a pushing force against the base metal plate 101 to deform it into the corrugated shape.

Eleventh, the space between the upper conveyer 7 and the lower conveyer 4 is decreased to a level approximately equal to a depth of the base metal plate 101 deformed into the corrugated shape. And, the air cylinder 27 is determined to have a stroke in correspondence with the decreased space between the upper and lower conveyers 7, 4, so that a lever ratio of the link mechanism 28 is set to less than 1 (e.g., 1/3). Thus, a force of the air cylinder 27 for moving the upper conveyer 7 can be decreased.

In this embodiment, a size of the base metal plate 101 in its longitudinal direction is larger than that in its breadth direction but can be made smaller than the size in its breadth direction. In such a case, the base metal plate 101 having a longitudinal size smaller than the roller interval L does not drop down because the base metal plate 101 is positioned on the lower conveyer 4.

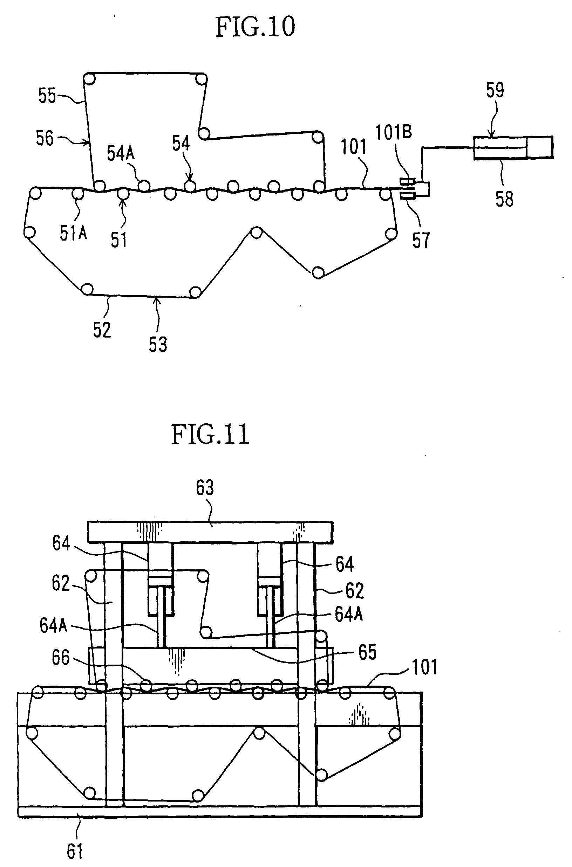

In this embodiment, the part separating means 9 comprises the lower roller group 2, the motor 17, the sprockets 18A, 18B, 18C, 18D, the chain 19, the lower belt 3, the upper roller group 5, the motor 24, the sprockets 25A, 25B, 25C, 25D, the chain 26 and the upper belt 6. But, the part separating means is not limited to have such components. For example, Fig. 10 shows that a part separating means 59 may comprise a lower conveyer 53 configured by putting a lower belt 52 around a roller group 51 comprising a plurality of rotatable free rollers 51A, an upper conveyer 56 configured by putting an upper belt 55 around a roller group 54 comprising a plurality of rotatable free rollers 54A, a clamping device 57 for catching a back end 101B of the base metal plate 101, and an air cylinder 58 which can move the clamping device 57 back and forth.

Further, in this embodiment, the space varying mechanism 10 is mounted on the stationary frame body 12 to suspend the upper conveyer 7. But, the space varying mechanism may be disposed on the side of the lower conveyer 4 and the upper conveyer 7 is fixed, so that the lower conveyer 4 can be moved vertically.

In addition, the base metal plate 101 is moved back and forth in this embodiment. But, the base metal plate 101 may be fixed, and the upper conveyer 7 and the lower conveyer 4 may be moved back and forth.

The number of the space varying mechanism 10 is one in this embodiment, but it may be two and disposed to oppose each other.

Furthermore, the space varying mechanism 10 used in this embodiment may be omitted. Instead of the space varying mechanism 10, the space between the upper conveyer 7 and the lower conveyer 4 may be adjusted to a predetermined value. And, the base metal plate 101 can be fed between the upper conveyer 7 and the lower conveyer 4 so to be deformed into the corrugated shape. In this state, the base metal plate 101 is moved back and forth by the part separating means 9.

In addition, the space varying mechanism 10 of this embodiment comprises the air cylinder 27 and the link mechanism 28 operated by the air cylinder 27. But, the space varying mechanism 10 is not limited to this configuration. For example, it may be configured as shown in Fig. 11. Specifically, a top 63 is mounted on four columns 62, 62, 62, 62 (only two of them are shown in the drawing) which are erected on a base plate 61, the space varying mechanism comprising two hydraulic cylinders 64, 64 is suspended from the top 63, a frame 65 is suspended by rods 64A, 64A of the hydraulic cylinders 64, 64, and an upper conveyer 66 is mounted on the frame 65. The hydraulic cylinders are two as shown in the drawing but may be three or more.

In this embodiment, the base metal plate 101 is held in the corrugated shape between the upper conveyer 7 and the lower conveyer 4 and moved back and forth in the longitudinal direction of the base metal plate 101. But, the base metal plate 101 may be set stationary and deformed into the corrugated shape, then the upper conveyer 7 and the lower conveyer 4 can be moved back and forth in the longitudinal direction of the base metal plate 101.

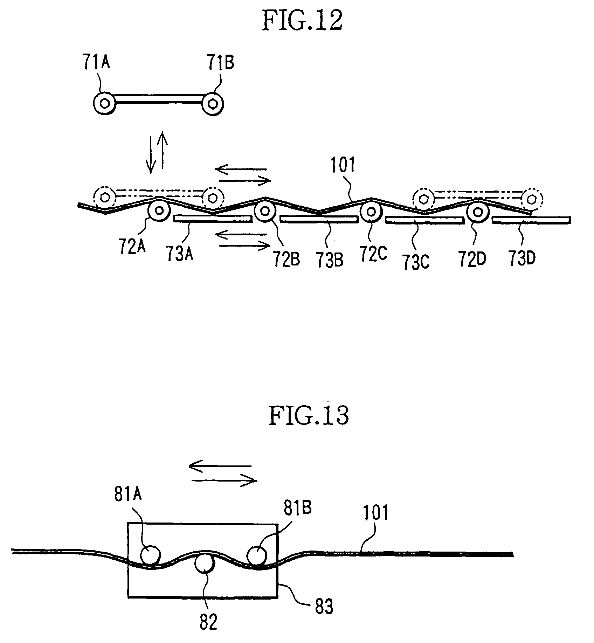

Otherwise, instead of the upper conveyer 7 and the lower conveyer 4 used in this embodiment, the part separating method described in claim 2 can be used as shown in Fig. 12 and Fig. 13.

The part separating method according to the embodiment described in claim 2 will be described with reference to Fig. 12.

The part separating method according to the embodiment described in claim 2 is a method that the plurality (16 of them) of parts 103 are separated at the uncut portions 102, 102, 102, 102 from the rectangular base metal plate 101 shown in Fig. 16.

As shown in the drawing, two first pushing members (rollers) 71A, 71B are disposed on one side, and a plurality of second pushing members (rollers) 72A, 72B, 72C, 72D, · · · are disposed on the other side to oppose the two first pushing members 71A, 71B. The two first pushing members 71A, 71B are moved back and forth in the longitudinal direction of the base metal plate 101.

Any of the plurality of second pushing members 72A, 72B, 72C, 72D, · · · is positioned between the first pushing members 71A, 71B in the longitudinal direction of the base metal plate 101 as the two first pushing members 71A, 71B are moved back and forth. And, a plurality of reception plates 73A, 73B, 73C, 73D, · · · are disposed to be integral with the plurality of second pushing members 72A, 72B, 72C, 72D.

The base metal plate 101 is sandwiched between the two first pushing members 71A, 71B on one side and any of the plurality of second pushing members 72A, 72B, 72C, 72D, · · · on the other side, the first pushing members 71A, 71B and the second pushing member 72A are mutually pushed to hold the base metal plate 101 in the corrugated shape in the longitudinal direction of the base metal plate 101.

The two first pushing members 71A, 71B and the plurality of second pushing members 72A, 72B, 72C, 72D, · · · are reciprocated with appropriate timing to deform the base metal plate 101 into the corrugated shape and to apply a repeated stress to the uncut portions 102 of the base metal plate 101, thereby ensuring the separation of the parts 103 from the base metal plate 101.

In this embodiment, the rollers are used as the first and second pushing members. But, the first and second pushing members are not limited to the rollers. For example, one of the first and second pushing members may be a roller and the other be a member having a corrugated surface. And, both the first and second pushing members may have a corrugated surface.

This embodiment has the two first pushing members on one side, but they may be three or more.

### Embodiment 2:

A part separating method according to another embodiment of the invention described in claim 2 will be described with reference to Fig. 13.

As shown in the drawing, two first pushing members 81A, 81B are disposed on one side.

A second pushing member 82, which is positioned between the first pushing members 81A, 81B in the longitudinal direction of the base metal plate 101, is disposed on the other side to oppose the two pushing members 81A, 81B. The first pushing members 81A, 81B and the second pushing member 82 are disposed to be integral with a reciprocating mechanism 83.

The base metal plate 101 is sandwiched between the two first pushing members 81A, 81B on one side and the second pushing member 82 on the other side, and the first pushing members 81A, 81B and the second pushing member 82 are mutually pushed. The base metal plate 101 is held in the corrugated shape in the longitudinal direction of the base metal plate 101, and both ends of the base metal plate 101 are fixed. The reciprocating mechanism 83 is moved back and forth on rails (not shown) in the longitudinal direction of the base metal plate 101 to apply a repeated stress to the uncut portions 102 of the base metal plate 101, thereby ensuring the separation of the parts 103 from the base metal plate 101.

Further, the base metal plate 101 is held in the corrugated state between the upper conveyer 7 and the lower conveyer 4 and moved back and forth in the longitudinal direction of the base metal plate 101 in this embodiment. But, the part separating apparatus according to the invention described in claim 7 can also be configured.

In this embodiment, rollers are used as the first and second pushing members for description. But, the first and second pushing members are not limited to the rollers. For example, one of the first and second pushing members may be a roller and the other be a member having a corrugated surface. And, both the first and second pushing members may also have a corrugated surface.

In this embodiment, the base metal plate 101 is fixed and the reciprocating mechanism 83 is moved back and forth in the longitudinal direction. But, the reciprocating mechanism 83 may be set stationary, and the base metal plate 101 can be moved back and forth in its longitudinal direction.

### Embodiment 3:

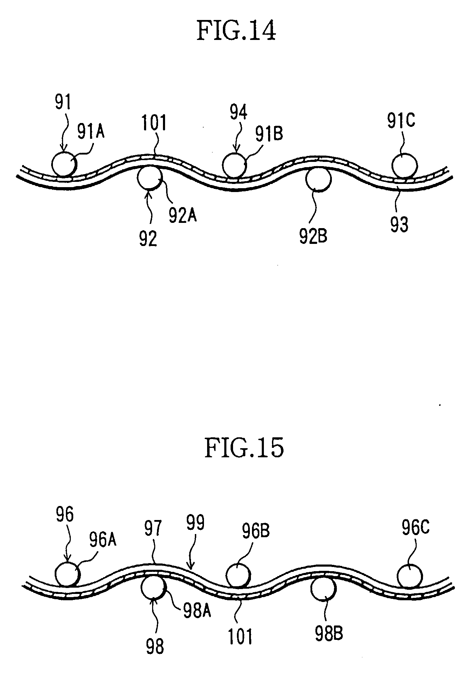

Fig. 14 shows main components of the part separating apparatus according the embodiment of the invention described in claim 9.

The part separating apparatus according to the embodiment of the invention described in claim 9 is basically configured in the same manner as the part separating methods according to the embodiments of the invention described in claims 1 through 5 and the part separating apparatuses according to the embodiments of the invention described in claims 6 through 8 and 10 through 14. Therefore, its differences from them will be described.

In Fig. 14, an upper roller group 91 comprising a plurality of rollers 91A, 91B, 91C, · · · is disposed on the upper side. A lower belt 93, which is put around a lower roller group 92 comprising a plurality of rollers 92A, 92B, · · · which are disposed in a staggered configuration with the plurality of rollers 91A, 91B, 91C, · · · of the upper roller group 91 in the longitudinal direction of the base metal plate 101, is disposed to oppose the upper roller group 91.

A corrugating/restraining means 94 is disposed for holding the base metal plate 101 in the corrugated shape in the longitudinal direction of the base metal plate 101 by sandwiching the base metal plate 101 between the upper roller group 91 and the lower belt 93 and mutually pushing the upper roller group 91 and the lower belt 93.

The configuration described above has the following effects.

First, the base metal plate 101 can be deformed along the corrugated shape of the lower belt 93, so that the base metal plate 101 can be deformed evenly, and a uniform stress can be applied to the uncut portions 102 of the base metal plate 101 to ensure the separation of the parts 103.

Second, the parts 103 separated from the base metal plate 101 are positioned on the lower belt 93 and do not drop from the lower belt 93. Thus, the parts 103 can be prevented from being damaged by dropping.

Third, even when the base metal plate 101 is moved back and forth with one end 103A of the part 103 not separated from and still connected at the uncut portion to the base metal plate 101, another end 103B of the part 103 is guided by the lower belt 93, so that the end 103B of the part 103 does not hit the lower roller group 92, and the base metal plate 101 can be moved back and forth smoothly.

In this embodiment, the base metal plate 101 is held in the corrugated shape between the upper conveyer 7 and the lower conveyer 4 and moved back and forth in the longitudinal direction of the base metal plate 101. But, the part separating apparatus of the invention described in claim 8 may also be configured.

### Embodiment 4:

Fig. 15 shows main components of the part separating apparatus according the embodiment of the invention described in claim 10.

The part separating apparatus according to the embodiment of the invention described in claim 10 is basically configured in the same manner as the part separating methods according to the embodiments of the invention described in claims 1 through 5 and the part separating apparatuses according to the embodiments of the invention described in claims 6 through 8 and 10 through 14. Therefore, its differences from them will be described below.

In the drawing, an upper belt 97 is put around an upper roller group 96 which comprises a plurality of rollers 96A, 96B, 96C, · · · and disposed on the upper side.

A lower roller group 98, which comprises a plurality of rollers 98A, 98B, · · · disposed in a staggered configuration with the plurality of rollers 96A, 96B, 96C, · · · of the upper roller group 96 in the longitudinal direction of the base metal plate 101, is disposed to oppose the upper belt 97.

A corrugating/restraining means 99 is disposed for holding the base metal plate 101 in the corrugated shape in the longitudinal direction of the base metal plate 101 by sandwiching the base metal plate 101 between the upper belt 97 and the lower roller group 98 and mutually pushing the upper belt 97 and the lower roller group 98.

By configuring as described above, the base metal plate 101 can be deformed along the corrugated shape of the upper belt 97, so that the base metal plate 101 can be deformed evenly, and a uniform stress can be applied to the uncut portions 102 of the base metal plate 101 to ensure the separation of the parts 103.

### Embodiment 5:

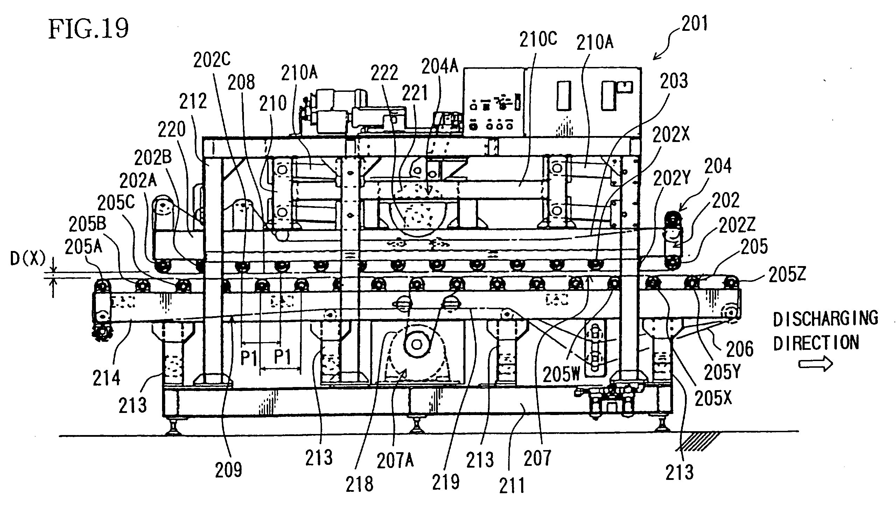

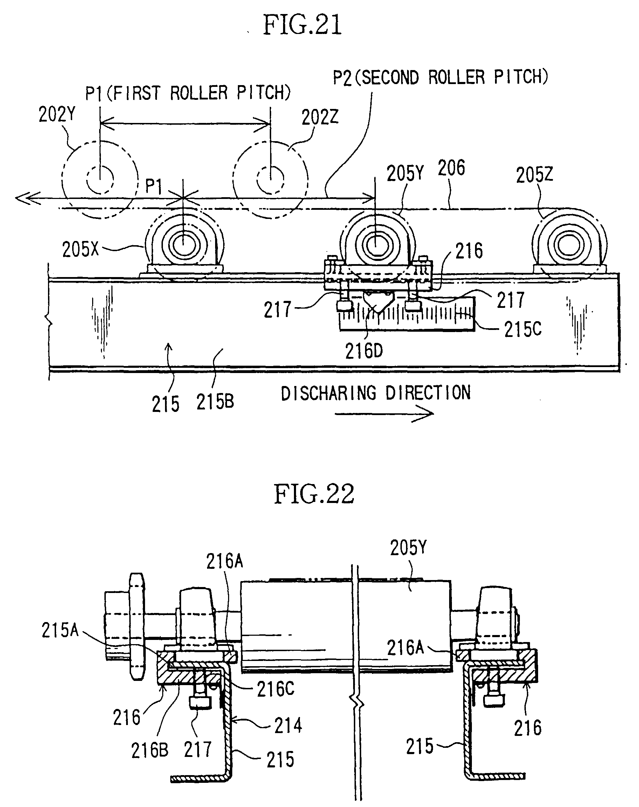

The part separating apparatus according to the embodiments of the invention described in claims 16 and 17 will be described with reference to Fig. 19 through Fig. 28.

In Fig. 19, reference numeral 101 is a part separating apparatus, which separates a plurality (16 of them in this embodiment) of parts 103 at uncut portions 102, 102, 102, 102 from a rectangular base metal plate 201 shown in Fig. 13 and, if the separated base metal plate 101 and parts 103 were deformed, operates to eliminate the distortion.

First, the general structure of the part separating apparatus 201 will be described.

An upper roller group 202 (a first roller group) comprises rollers 202A, 202B, 202C, · · · , 202X, 202Y, 202Z. An upper conveyer 204 comprises the upper roller group 202, an upper belt (a first belt) 203 which is put around the upper roller group 202, and an upper drive device 204A for driving the upper roller group 202.

A lower roller group (a second roller group) 205 comprises rollers 205A, 205B, 205C, · · · , 205W, 205X, 205Y, 205Z. A lower conveyer 207 comprises the lower roller group 205, a lower belt (a second belt) 206 which is put around the lower roller group 205, and a lower drive device 207A for driving the lower roller group 205.

The upper conveyer 204 is disposed to oppose the lower conveyer 207, which is positioned on the lower side, and the upper conveyer 204 is positioned on the upper side.

The part separating apparatus 201 has a corrugating/restraining means 208, which holds the base metal plate 101 between the lower conveyer 207 and the upper conveyer 204 in a corrugated shape in the longitudinal direction of the base metal plate 101, a base metal plate reciprocating/discharging means 209, which reciprocates the base metal plate 101 held by the corrugating/restraining means 208 in the longitudinal direction of the base metal plate 101 and discharges the base metal plate 101 and the parts 103 in the longitudinal direction of the base metal plate 101 while keeping a space between the upper belt 203 and the lower belt 206, and a space varying mechanism 210 which determines space D(X) (X = 1, 2, 3, · · · ) between the upper belt 203 and the lower belt 206.

The part separating apparatus 201 will be described in detail.

The part separating apparatus 201 has a base plate 211 to which a substantially cubit frame body 212 is fixed. A lower frame 214 is supported on the base plate 211 through support members 213, 213, 213, 213.

The lower roller group 205 is mounted on the lower frame 214. The rollers 205A, 205B, 205C, · · · , 205W, 205X, 205Y, 205Z of the lower roller group 205 have the same diameter. And, a first pitch P1 between each of the rollers 205A through 205X is equal.

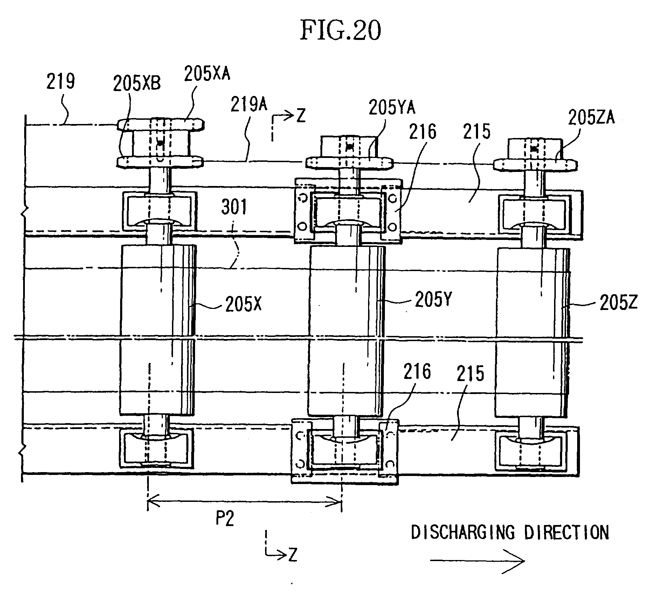

Mounted structures of the rollers 205X, 205Y, 205Z will be described with reference to Fig. 20 through Fig. 22.

The lower frame 214 has lower side members 215, 215 having an angular C-shaped cross section, and a slide guide 216 is mounted on an upper flange 215A of each lower side member 215 so to be slidable in the longitudinal direction of the lower side member 215. The slide guide 216 has upper and lower plates 216A, 216B for holding the upper flange 215A therebetween. The roller 205Y is fixed to the right and left upper plates 216A, 216A.

A female thread portion 216C is formed in the lower plate 216B, and a bolt member 217 is threaded into the female thread portion 216C. By tightening the bolt member 217, the slide guide 216 is fixed to the upper flange 215A. And, a pointer 216D is fitted to the lower plate 216B.

A graduation plate 215C is attached to a side face 215B of the lower side member 215, and the pointer 216D slides over the graduation plate 215C to indicate a position.

The slide guide 216 is moved and fixed on the lower side member 215, so that the roller 205Y between the two rollers 205X, 205Y having a second pitch P2 can be moved or fixed as desired.

As shown in Fig. 20, chain sprockets 205XA, 205XB which are driven by a chain 219 to be described afterward are mounted on the shaft of the roller 205X, a chain sprocket 205YA is mounted on the shaft of the roller 205Y, and a chain sprocket 205ZA is mounted on the shaft of the roller 205Y. A chain 219A is put around the chain sprockets 205XB, 205YA, 205ZA, making it easy to adjust the position of the roller 205Y independent of the chain 219.

The lower drive device 207A has a motor 218 and the chain 219 which is put around the output shaft of the motor 218. The rollers 205A, 205B, 205C, · · · , 205W, 205X, 205Y, 205Z of the lower roller group 205 are rotated through the chain 219, and the lower belt 206 is driven by the turning effects of the rollers 205A, 205B, 205C, · · · , 205W, 205X, 205Y, 205Z of the lower roller group 205.

And, the space varying mechanism 210 is mounted on the frame body 212, and an upper frame 220 is suspended by the space varying mechanism 210. The space varying mechanism 210 has a pair of link mechanisms 210A, 210A, which are operated by an air cylinder (not shown), and a link member 210C for connecting the link mechanisms 210A, 210A. In the same manner as the prior art, the amount of deflection δ 2 of the base metal plate 101 is related to space D(2). The amount of deflection corresponds to a corrugated depth of the base metal plate 101. The space has a positive or negative value, and the amount of deflection has a positive value only.

The corrugating/restraining means 208 holds the base metal plate 101 between the lower conveyer 207 and the upper conveyer 204 through the upper belt 203 and the lower belt 206 and pushes the upper conveyer 204 to the lower conveyer 207. The weight of the upper frame 220 suspended by the space varying mechanism 210 can be used as the pushing force, and a pushing force of an actuator (not shown) for moving the upper frame 220 downward can also be used.

The upper roller group 202 is disposed on the upper frame 220. The rollers 202A, 202B, 202C, · · · , 202X, 202Y, 202Z of the upper roller group 202 have the same diameter. And, a first pitch P1 between each of the rollers 202A, 202B, 202C, · · · , 202X, 202Y, 202Z is equal.

The rollers 202A, 202B, 202C, · · · , 202X, 202Y, 202Z are staggered with respect to the rollers 205A, 205B, 205C, · · · , 205W, 205X, 205Y, 205Z by a half (0.5 pitch) of the first pitch P1 in a longitudinal direction of the base metal plate 101. Thus, the upper conveyer 204 can be forced against the lower conveyer 207 to deform the base metal plate 101 into a corrugated shape.

At the termination of the lower roller group 205, the rollers 205Y, 205Z are positioned to be extended to the work discharging side from the roller 202Z at the termination of the upper roller group 202.

The second pitch P2 of the two rollers 205X, 205Y of the lower roller group 205 ranging over the roller 202Z at the end of the upper roller group 202 is larger than the first pitch P1 between the roller 202Z at the termination of the upper roller group 202 and the roller 202Y positioned just before the termination.

The upper drive device 204A has a motor 221 and a chain 222 which is put around the output shaft of the motor 221. The rollers 202A, 202B, 202C, · · · , 202X, 202Y, 202Z of the upper roller group 202 are rotated through the chain 222 to drive the upper belt 203 by the turning effects of the rollers 202A, 202B, 202C, · · · , 202X, 202Y, 202Z of the upper roller group 202.

Thus, the base metal plate reciprocating/discharging means 209 comprises the lower roller group 205, the lower drive device 207A, the lower belt 206, the upper roller group 202, the upper drive device 204A, and the upper belt 203.

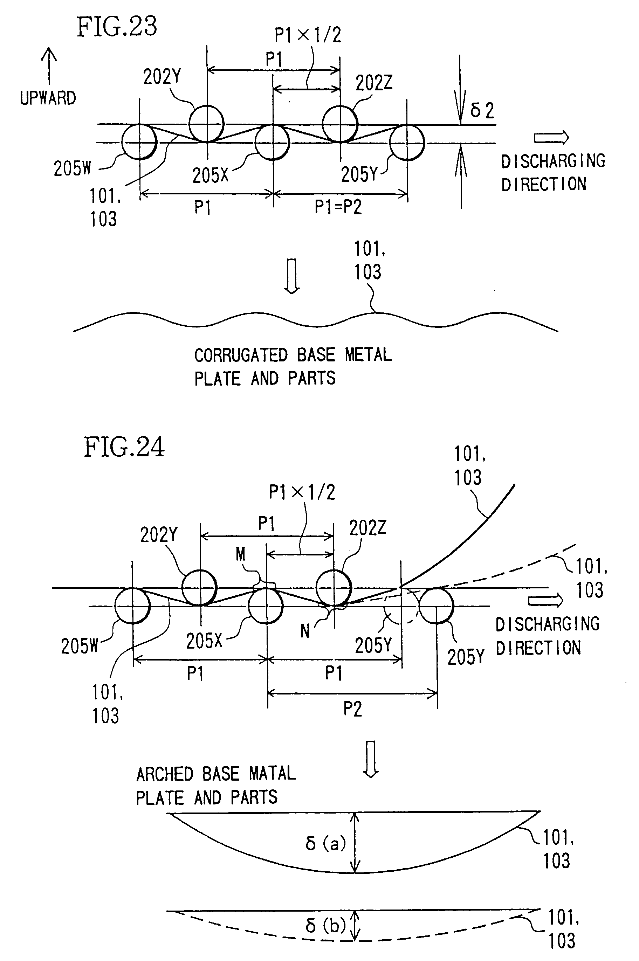

Operation of this embodiment will be described with reference to Fig. 23 and Fig. 24.

Fig. 23 is an explanatory diagram showing that when the upper conveyer 204 is raised to remove the base metal plate 101 and the parts 103, the base metal plate 101 and the parts 103 are deformed into the corrugated shape.

In the drawing, the base metal plate 101 is held in the corrugated shape by the corrugating/restraining means 208 in such a way that the base metal plate 101 is set to have the amount of deflection δ 2. In this state, the base metal plate 101 is moved back and forth by the base metal plate reciprocating/discharging means 209 so to separate the parts 103 from the base metal plate 101. When the base metal plate 101 and the parts 103 are removed by raising the upper conveyer 204, the base metal plate 101 and the parts 103 are deformed into the corrugated shape.

Fig. 24 is an explanatory diagram showing the amount of deflection of the base metal plate 101 and the parts 103 when the second pitch P2 is changed.

As shown in the drawing, after separating the parts 103 from the base metal plate 101, the base metal plate 101 and the parts 103 are discharged in the longitudinal direction of the base metal plate 101 by the base metal plate reciprocating/discharging means 209 without raising the upper conveyer 204. The base metal plate 101 and the parts 103 remain in the deformed state and show the arched shapes as shown in Fig. 24(a) and Fig. 24(b).

Fig. 24(a) shows that the second pitch P2 is set to be equal to P1, the base metal plate 101 is determined to have the amount of deflection δ 2 (a state that a space is held between the upper belt 203 and the lower belt 206), and the parts 103 and the base metal plate 101 are discharged without raising the upper conveyer 204. The discharged parts 103 and base metal plate 101 have the remained distortion showing an arched shape. When the parts 103 and the base metal plate 101 are discharged, transformation M made by the roller 205X in Fig. 23 is reversed to transformation N by the next roller 202Z, so that the parts 103 and the base metal plate 101 are deformed into not a corrugated shape but an arched shape. And it was assured by testing.

Fig. 24(b) shows that the second pitch P2 is set to be larger than P1, the base metal plate 101 is determined to have the amount of deflection δ 2 (a state that a space is held between the upper belt 203 and the lower belt 206), and the parts 103 and the base metal plate 101 are discharged without raising the upper conveyer 204. In this case, by the roller 202Z at the termination of the upper belt 203 and the rollers 205X, 205Y at both ends of the second pitch P2 of the lower belt 206 ranging over the roller 202Z, the amount of deflection of the parts 103 and the base metal plate 101 when they are taken out, decreases in proportion to the amount of deflection of the arched shape of the parts 103 and the base metal plate 101 shown in Fig. 24(a). In other words, the amount of deflection δ (b) of Fig. 24(b) is larger than the amount of deflection δ (a)of Fig. 24(a), and distortion of the parts 103 and the base metal plate 101 is eliminated. When a change (expansion) of the second pitch P2 becomes large, a stress applied to the base metal plate 101 and the parts 103 is reduced, and remaining distortion is also reduced.

Elimination of distortion from the base metal plate 101 and the parts 103 was verified as follows.

The base metal plate 101 tested was a SPCC material having a size of 1.2 mm thick, 900 mm long and 600 mm wide.

The base metal plate 101 was sandwiched between the upper belt 203 and the lower belt 206 and reciprocated two times into the corrugated shape before being discharged.

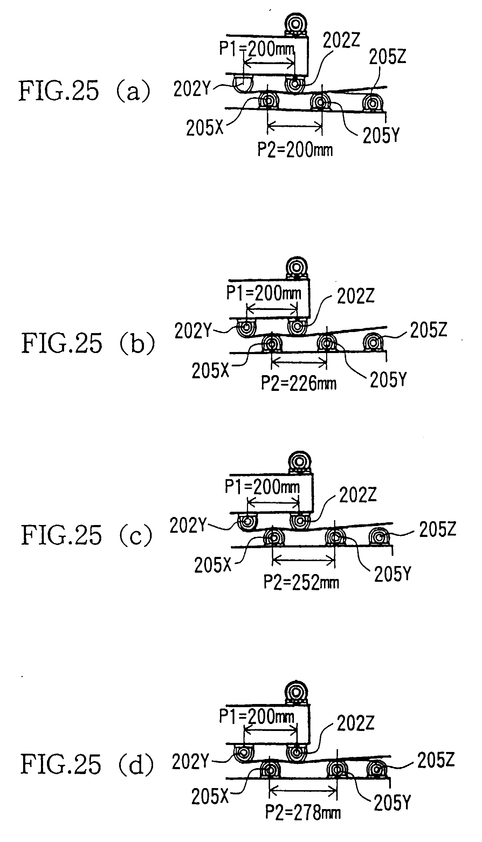

As shown in Fig. 25, the first pitch P1 was 200 mm (Fig. 25(a)), while the second pitch P2 between the rollers 205X and 205Y of the lower belt 206 was varied to 226 mm (Fig. 25(b)), 252 mm (Fig. 25(c)) and 278 mm (Fig. 25(d)), and the predetermined value of amount of deflection was varied for testing. Test results are shown in Tables 1, 2 and 3.

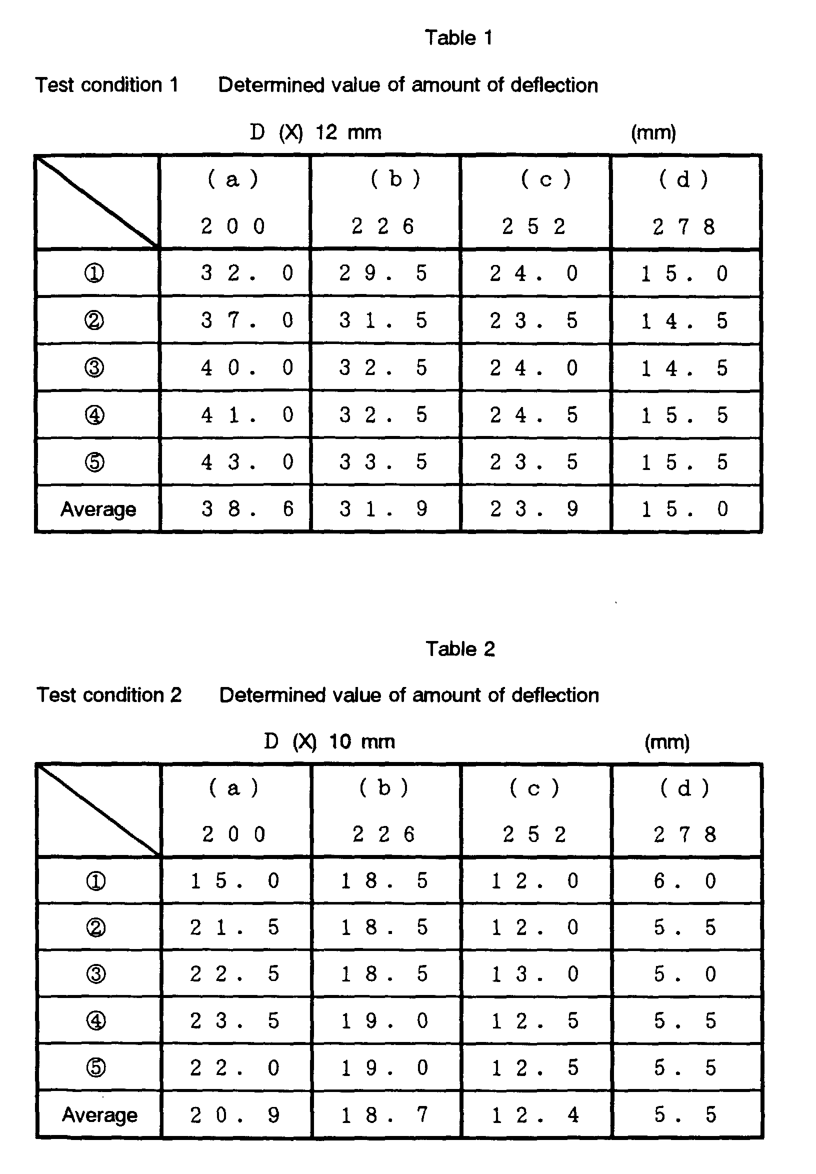

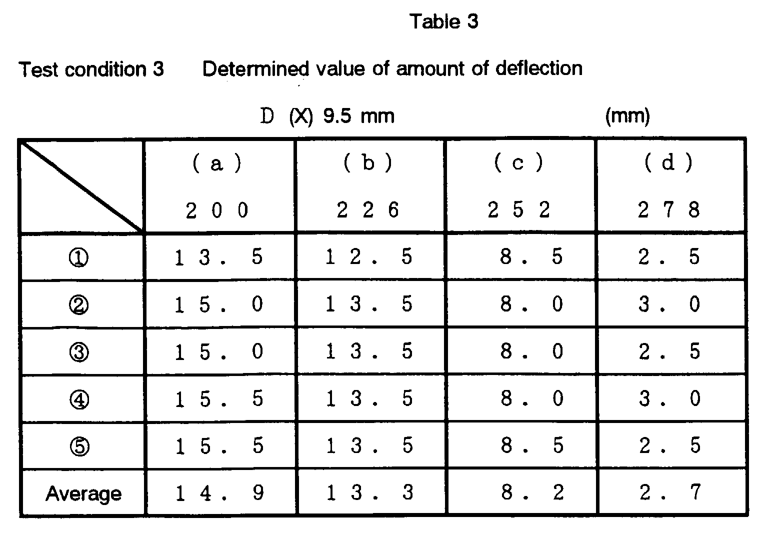

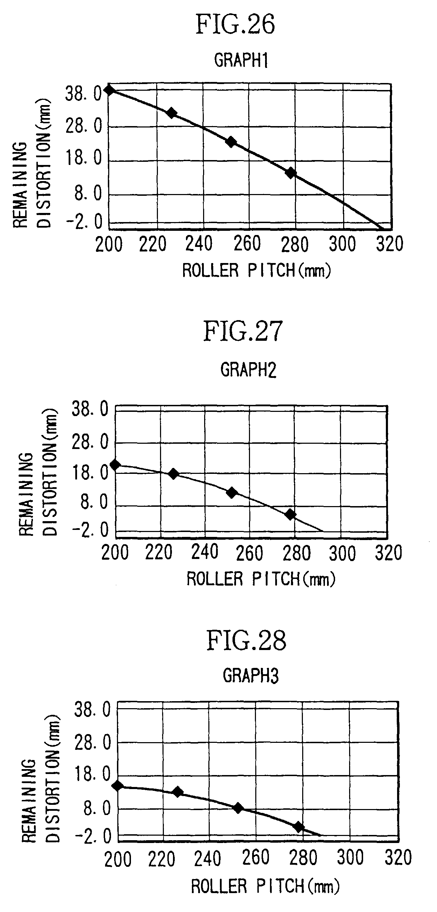

Tables 1, 2, 3 show the test results obtained under the test conditions 1, 2, 3 with the determined value D(X) of amount of deflection varied. Data of Tables 1, 2, 3 are shown as Graph 1 in Fig. 26, Graph 2 in Fig. 27 and Graph 3 in Fig. 28.

In Tables 1, 2, 3, test conditions (a), (b), (c), (d) correspond to (a), (b), (c), (d) with the second pitch P2 changed in Fig. 25. And, the remaining distortion in Graphs 1, 2, 3 of Fig. 28 indicates the measured amount of deflection δ (b) of the discharged base metal plate 101 in the arched state.

Tables 1, 2, 3 show that the amount of deflection δ (b) remaining in the base metal plate 101 decreases as the second pitch P2 is increased. Thus, distortion of the base metal plate 101 is eliminated.

In addition to the SPCC material, it was also assured that distortion of iron, stainless steel and other plates could be eliminated.

By configuring as described above, the second pitch P2 of the rollers 205X, 205Y of the lower roller group 205 ranging over the roller 202Z at the termination of the upper roller group 202 is larger than the first pitch P1 between the roller 202Z at the termination of the upper roller group 202 and the roller 202Y just before the termination of the upper roller group 202. Thus, the amount of deflection in the arched shape of the base metal plate 101 and the parts 103 discharged in the longitudinal direction of the base metal plate 101 can be reduced to eliminate distortion.

As a result, a conventional step for changing the setup after the separation of parts can be omitted, and the separated parts 103 and base metal plate 101 can be prevented from being damaged.

Besides, by using the operation for discharging the parts 103 and the base metal plate 101, distortion of the parts 103 and base metal plate 101 can be eliminated. Therefore, it is not necessary to install another distortion eliminating machine on the next step after discharging the parts 103 and the base metal plate 101, enabling to make labor saving for the distortion eliminating work.

Depending on conditions such as the base metal plate 101 and parts 103 having a variety of thickness and material and the predetermined value D(X) of amount of deflection, the second pitch P2 on the side of the lower belt 206 can be readily changed by adjusting, so that distortion of the base metal plate 101 can be eliminated readily according to the respective conditions.

In this embodiment, the pitch of the rollers 202A, 202B, 202C, · · · , 202X, 202Y, 202Z of the upper roller group 202 is equal but not essentially required to be equal.

And, the pitch from the roller 205A to the roller 205X of the lower roller group 205 is equal in this embodiment but not essentially required to be equal.

Furthermore, the base metal plate reciprocating/discharging means 209 comprises the lower roller group 205, the lower drive device 207A, the lower belt 206, the upper roller group 202, the upper drive device 204A and the upper belt 203 in this embodiment but not limited to have such components as the part separating means. For example, as shown in Fig. 10, the base metal plate reciprocating/discharging means 59 can be configured to have the lower conveyer 53 which is configured by putting the lower belt 52 around the roller group 51 consisting of the plurality of rotatable free rollers 51A, the upper conveyer 56, which is configured by putting the upper belt 55 around the roller group 54 consisting of the plurality of rotatable free rollers 54A, the clamp device 57 for catching the back end 101B of the base metal plate 101, and the air cylinder 58 for moving the clamp device 57 to discharge the base metal plate 101 after reciprocating the clamp device 57.

And, in this embodiment, the base metal plate 101 is held in the corrugated state between the upper conveyer 204 and the lower conveyer 207 and moved back and forth in the longitudinal direction of the base metal plate 101. But, the base metal plate 101 can be set stationary and the upper conveyer and the lower conveyer can be moved back and forth in the longitudinal direction of the base metal plate 101 with the base metal plate 101 in the corrugated shape.

## Claims

1. A method for separating parts from a base metal plate by fabricating the outlines of the parts with uncut portions remained on the base metal plate, comprising:
disposing a pushing member on both sides of the base metal plate along the longitudinal direction of the base metal plate;
pushing the base metal plate by the pushing members to hold the base metal plate in a corrugated shape in the longitudinal direction of the base metal plate; and
moving the base metal plate or the pushing members back and forth in the longitudinal direction of the base metal plate.

2. The method for separating parts according to claim 1, further comprising:
disposing at least two first pushing members on one side of the base metal plate in the longitudinal direction of the base metal plate;
disposing at least one second pushing member, which is disposed between the first pushing members, on the other side of the base metal plate to oppose the first pushing members; and
holding the base metal plate between the pushing members to press it by the pushing members so to hold it in a corrugated shape in its longitudinal direction; and
moving the base metal plate or the pushing members back and forth in the longitudinal direction of the base metal plate.

3. The method for separating parts according to claim 1, further comprising:
disposing a first belt, which is put around a first roller group comprising a plurality of rollers in the longitudinal direction of the base metal plate, on one side of the base metal plate;
disposing a second belt, which is put around a second roller group comprising a plurality of rollers arranged in a staggered configuration with the plurality of rollers of the first roller group, on the other side of the base metal plate so to oppose the first belt;
holding the base metal plate between both the belts to press it by both the belts so to hold the base metal plate in a corrugated shape in its longitudinal direction; and
moving the base metal plate or both the belts back and forth in the longitudinal direction of the base metal plate.

4. The method for separating parts according to claim 1, further comprising:
disposing an upper belt, which is put around an upper roller group comprising a plurality of rollers in the longitudinal direction of the base metal plate, on the upper side of the base metal plate;
disposing a lower belt, which is put around a lower roller group comprising a plurality of rollers arranged in a staggered configuration with the plurality of rollers of the upper roller group, on the lower side of the base metal plate so to oppose the upper belt;
holding the base metal plate between both the belts to press it by both the belts so to hold the base metal plate in a corrugated shape in its longitudinal direction; and
moving the base metal plate or both the belts back and forth in the longitudinal direction of the base metal plate.

5. The method for separating parts according to claim 1, further comprising:
disposing a first belt, which is put around a first roller group comprising a plurality of rollers in the longitudinal direction of the base metal plate, on one side of the base metal plate;
disposing a second belt, which is put around a second roller group comprising a plurality of rollers arranged in a staggered configuration with the plurality of rollers of the first roller group, on the other side of the base metal plate so to oppose the first belt;
decreasing a space between both the belts to deform the base metal plate into a corrugated shape in its longitudinal direction, increasing the space between both the belts, moving the base metal plate or both the belts in the longitudinal direction of the base metal plate and decreasing the space between both the belts to deform the base metal plate into a corrugated shape in a reverse topology, and repeating these steps.

6. A part separating apparatus, comprising:
pushing members, which are disposed on both sides and in a longitudinal direction of a base metal plate having outlines of parts punched with uncut portions remained;
a corrugating/restraining means, which approaches the pushing members to each other to press the base metal plate placed between them so to deform the base metal plate into a corrugated shape in its longitudinal direction and also holds the base metal plate in the corrugated shape; and
a part separating means, which moves the base metal plate being held by the corrugating/restraining means or the pushing members being approached by the corrugating/restraining means back and forth in the longitudinal direction of the base metal plate.

7. The part separating apparatus according to claim 6, further comprising:
at least two first pushing members, which are disposed in the longitudinal direction of the base metal plate;
at least one second pushing member, which is disposed to oppose and between the first pushing members;
a corrugating/restraining means, which approaches both the pushing members to each other to press the base metal plate placed between both the pushing members so to deform the base metal plate into a corrugated shape in its longitudinal direction and also holds the base metal plate in the corrugated shape; and
a part separating means, which moves the base metal plate being held by the corrugating/restraining means or the pushing members being approached by the corrugating/restraining means back and forth in the longitudinal direction of the base metal plate.

8. The part separating apparatus according to claim 6, further comprising:
a first belt, which is put around a first roller group comprising a plurality of rollers disposed in the longitudinal direction of the base metal plate;
a second belt, `which is put around a second roller group comprising a plurality of rollers disposed to oppose the first belt and positioned in a staggered configuration with the plurality of rollers of the first roller group;
a corrugating/restraining means, which approaches both the belts to each other to press the base metal plate placed between them so to deform the base metal plate into a corrugated shape in its longitudinal direction and holds the base metal plate in the corrugated shape; and
a part separating means, which moves the base metal plate being held by the corrugating/restraining means or both the bets being approached by the corrugating/restraining means back and forth in the longitudinal direction of the base metal plate.

9. The part separating apparatus according to claim 6, further comprising:
an upper roller group, which comprises a plurality of rollers disposed in the longitudinal direction of the base metal plate;
a lower belt, which is put around a lower roller group comprising a plurality of rollers disposed to oppose the upper roller group and positioned in a staggered configuration with the plurality of rollers of the upper roller group;
a corrugating/restraining means, which approaches the upper roller group and the lower belt to each other to press the base metal plate placed between them so to deform the base metal plate into a corrugated shape in its longitudinal direction and holds the base metal plate in the corrugated shape; and
a part separating means, which moves the base metal plate being held by the corrugating/restraining means or the upper roller group and the lower belt being approached by the corrugating/restraining means back and forth in the longitudinal direction of the base metal plate.

10. The part separating apparatus according to claim 6, further comprising:
an upper belt, which is put around an upper roller group comprising a plurality of rollers disposed in the longitudinal direction of the base metal plate;
a lower roller group comprising a plurality of rollers disposed to oppose the upper belt and positioned in a staggered configuration with the plurality of rollers of the upper roller group;
a corrugating/restraining means, which approaches the upper belt and the lower roller group to each other to press the base metal plate placed between them so to deform the base metal plate into a corrugated shape in the longitudinal direction of the base metal plate and holds the base metal plate in the corrugated shape; and
a part separating means, which moves the base metal plate held by the corrugating/restraining means or the upper belt and the lower roller group mutually approached by the corrugating/restraining means back and forth in the longitudinal direction of the base metal plate.

11. The part separating apparatus according to claim 6, further comprising:
an upper belt, which is put around an upper roller group comprising a plurality of rollers disposed in the longitudinal direction of the base metal plate;
a lower belt, which is put around a lower roller group comprising a plurality of rollers disposed to oppose the upper belt and positioned in a staggered configuration with the plurality of rollers of the upper roller group;
a corrugating/restraining means, which approaches both the belts to each other to press the base metal plate placed between them so to deform the base metal plate into a corrugated shape in its longitudinal direction and holds the base metal plate in the corrugated shape; and
a part separating means, which moves the base metal plate being held by the corrugating/restraining means or both the belts being approached by the corrugating/restraining means back and forth in the longitudinal direction of the base metal plate.

12. The part separating apparatus according to claim 11, further comprising a space varying mechanism for adjusting the space between the lower belt and the upper belt.

13. The part separating apparatus according to claim 12, wherein the space varying mechanism is mounted on a stationary frame body and suspends the upper conveyer which has the upper belt put around the upper roller group.

14. The part separating apparatus according to claim 13, wherein the space varying mechanism has a cylinder mounted on the frame body and a link mechanism which is mounted on the frame body and suspends the upper conveyer to move it vertically by the cylinder.

15. A method for eliminating distortion from parts when their outlines are fabricated with uncut portions remained on a base metal plate and separated from the base metal plate, comprising:
disposing a first belt, which is put around a first roller group comprising a plurality of rollers in the longitudinal direction of the base metal plate, on one side of the base metal plate;
disposing a second belt, which is put around a second roller group comprising a plurality of rollers arranged in a staggered configuration with the plurality of rollers of the first roller group, on the other side of the base metal plate so to oppose the first belt;
holding the base metal plate between both the belts to press it by both the belts so to hold the base metal plate in a corrugated shape in its longitudinal direction;
moving the base metal plate or both the belts back and forth in the longitudinal direction of the base metal plate to separate the parts from the base metal plate; and
setting the space between both the belts to a level larger than that when the parts are separated to move the base metal plate and the parts in the longitudinal direction of the base metal plate.

16. The part separating apparatus according to claim 6, further comprising:
a first belt, which is put around a first roller group comprising a plurality of rollers disposed in the longitudinal direction of the base metal plate;
a second belt, which is put around a second roller group comprising a plurality of rollers disposed to oppose the first belt and positioned in a staggered configuration with the plurality of rollers of the first roller group;
a corrugating/restraining means, which approaches both the belts to each other to press the base metal plate placed between them so to deform the base metal plate into a corrugated shape in its longitudinal direction and holds the base metal plate in the corrugated shape; and
a part separating/discharging means, which moves the base metal plate being held by the corrugating/restraining means or both the belts being approached by the corrugating/restraining means back and forth in the longitudinal direction of the base metal plate to separate the parts from the base metal plate, and discharges the base metal plate and the parts in the longitudinal direction of the base metal plate while retaining the space between both the belts; wherein:
the termination of the second roller group has the roller at the termination positioned away from the roller at the termination of the first roller group toward the work discharge side; and
pitch P2 of two rollers of the second roller group ranging over the roller at the termination of the first roller group is larger than pitch P1 between the roller at the termination of the first roller group and the roller just before the roller at the termination.

17. The part separating apparatus according to claim 16, wherein between the two rollers forming the pitch P2, the one on the discharge side is mounted to be movable and stationary as desired.
